(19) **Europäisches Patentamt**
**European Patent Office**
**Office européen des brevets**

(11) **EP 3 407 307 B1**

(12) **EUROPÄISCHE PATENTSCHRIFT**

(45) Veröffentlichungstag und Bekanntmachung des Hinweises auf die Patenterteilung:
**18.05.2022   Patentblatt 2022/20**

(21) Anmeldenummer: **17172461.0**

(22) Anmeldetag: **23.05.2017**

(51) Internationale Patentklassifikation (IPC):
***G07B 15/04*** *(2006.01)*

(52) Gemeinsame Patentklassifikation (CPC):
**G07B 15/04; H04W 4/44;** G06Q 2240/00;
G07C 2209/63; H04W 4/20; H04W 4/80

(54) **PARKSYSTEM UND VERFAHREN ZUM BETREIBEN EINES PARKSYSTEMS**

PARKING SYSTEM AND METHOD FOR OPERATING SAME

SYSTÈME DE STATIONNEMENT ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2018   Patentblatt 2018/48**

(73) Patentinhaber: **Scheidt & Bachmann GmbH**
**41238 Mönchengladbach (DE)**

(72) Erfinder: **Miller, Norbert**
**41063 Mönchengladbach (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 2 312 537          WO-A1-2016/123662
WO-A1-2017/063089     DE-A1-102014 018 190
US-A1- 2017 055 157

**Beschreibung**

Die Anmeldung betrifft ein Parksystem, insbesondere für eine Parkvorrichtung, umfassend mindestens eine Zugangsanordnung mit mindestens einer Zugangsvorrichtung, eingerichtet zur Kontrolle einer Durchfahrt von einem ersten Bereich mit einem Zufahrtsabschnitt in einen weiteren Bereich, mindestens eine erste, der Zugangsvorrichtung zugeordnete Sendevorrichtung, eingerichtet zum Aussenden eines ersten Sendefelds, wobei das erste Sendefeld mindestens einen ersten, von einem in dem Zufahrtsabschnitt befindlichen mobilen Endgerät empfangbaren Zugangsdatensatz überträgt. Darüber hinaus betrifft die Anmeldung ein Verfahren zum Betreiben eines Parksystems.

Ein Parksystem für Parkvorrichtungen, wie Parkplätze, Parkhäuser und dergleichen, verfügt in der Regel über eine oder mehrere Zugangsanordnung/en. Eine Zugangsanordnung umfasst im Allgemeinen eine oder mehrere Zugangsvorrichtung/en. Beispielsweise kann als Zugangsanordnung eine Schranke mit einem schwenkbaren Schrankenbaum vorgesehen sein. Mit einer derartigen Zugangsvorrichtung wird insbesondere die Durchfahrt eines Fahrzeugs von einem ersten Bereich in einen weiteren Bereich kontrolliert bzw. gesteuert. So kann bei einer Parkvorrichtung eine Zugangsanordnung mit mindestens einer Zugangsvorrichtung vorgesehen sein, um die Durchfahrt von einem nicht kontrollierten Bereich, beispielsweise einer Straße, in einen kontrollierten Bereich, beispielsweise den Parkbereich, zu steuern. Mit anderen Worten kann das Einfahren in die Parkvorrichtung durch eine Zugangsvorrichtung gesteuert werden. Alternativ oder zusätzlich kann bei einer Parkvorrichtung eine Zugangsanordnung mit mindestens einer Zugangsvorrichtung vorgesehen sein, um die Durchfahrt eines Fahrzeugs von dem kontrollierten Bereich in den nicht kontrollierten Bereich zu steuern. Mit anderen Worten kann die Ausfahrt aus der Parkvorrichtung durch eine Zugangsvorrichtung gesteuert werden.

Bei bekannten Zugangsvorrichtungen wird das Einfahren in eine Parkvorrichtung nach der Erstellung eines Kurzparkertickets aufgrund einer Benutzeraktion gewährt. Das Kurzparkerticket, insbesondere ein Papierticket, wird dann nach Ende einer Parkzeit von einem Benutzer an einem Automaten bezahlt und bei der Ausfahrt durch eine Validatorvorrichtung der Zugangsvorrichtung überprüft. Bei einer positiven Prüfung wird die Durchfahrt freigegeben. Stellt die Validatorvorrichtung jedoch fest, dass das Ticket beispielsweise noch nicht bezahlt wurde oder dass die Zahlung zu lange zurückliegt, so bleibt die Zugangsvorrichtung geschlossen.

Ein stetiges Anliegen bei Parksystemen ist es, den Nutzerkomfort zu verbessern. Insbesondere werden die manuellen Nutzeraktionen als nutzerunfreundlich angesehen. Aus dem Stand der Technik sind hierzu Parksysteme bekannt, bei denen die erforderlichen Nutzeraktionen minimiert werden können.

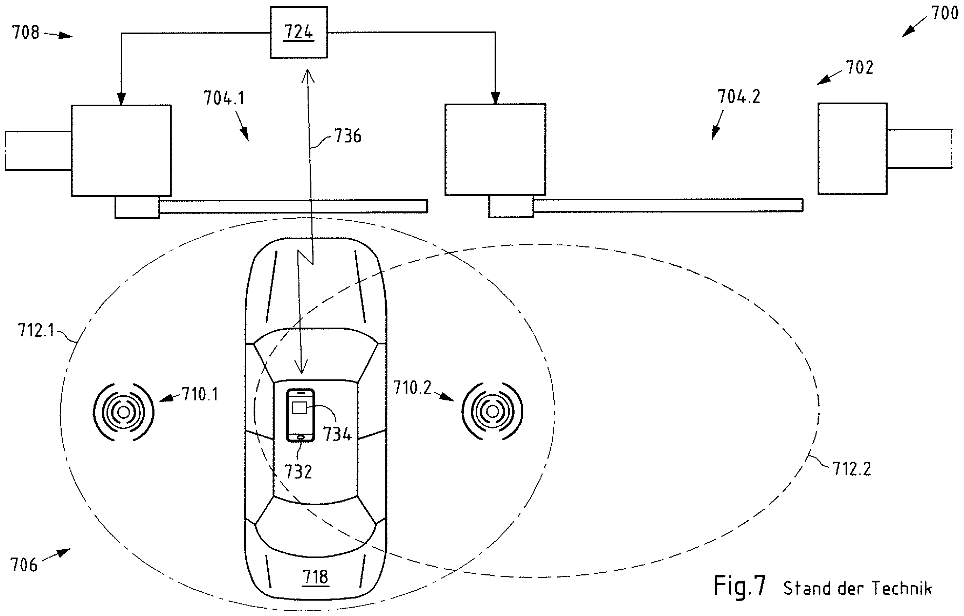

Ein beispielhaftes Parksystem 700 gemäß dem Stand der Technik ist in Figur 7 gezeigt. Das Parksystem 700 umfasst eine Zugangsanordnung 702 mit zwei Zugangsvorrichtungen 704.1, 704.2. Jeder Zugangsvorrichtung 704.1, 704.2 ist eine Sendevorrichtung 710.1, 710.2 zugeordnet, die jeweils ein Sendefeld mit einem Zugangsdatensatz aussenden. Mit der Zugangsanordnung 702 bzw. den Zugangsvorrichtungen 704.1, 704.2 kann allgemein die Durchfahrt von einem ersten Bereich 706 in einen weiteren Bereich 708 kontrolliert werden.

Im Betrieb des Parksystems 700 wird ein höherer Nutzerkomfort dadurch ermöglicht, dass der Nutzer nicht mehr in herkömmlicher Weise ein Kurzparkerticket für die Durchfahrt verwenden muss. Anstelle des Kurzparkertickets kann ein dem Nutzer zugeordnetes mobiles Endgerät 732 verwendet werden, auf dem eine Zugangsanwendung installiert sein kann. Empfängt das mobile Endgerät 732 ein Sendefeld 712.1, 712.2 mit einem darin enthaltenen Zugangsdatensatz, verarbeitet dieses den empfangenen Zugangsdatensatz mit Hilfe der Zugangsanwendung und sendet eine Zugangsnachricht an eine Steuervorrichtung 724 über ein drahtloses Kommunikationsnetz 736. Die Steuervorrichtung 724 kann dann, basierend auf dem empfangenen Zugangsdatensatz, die diesen Zugangsdatensatz aussendende Sendevorrichtung bestimmen und hieraus die der Sendevorrichtung zugeordnete Zugangsvorrichtung ableiten. Diese kann anschließend angesteuert werden, um die Durchfahrt freizugeben. Mit anderen Worten soll dafür gesorgt werden, dass die richtige Einfahrt zum Parkhaus freigegeben wird, nämlich diejenige, vor der das Fahrzeug 718 steht.

Problematisch hieran ist jedoch, dass ein Sendefeld 712.2 von einer zweiten Zugangsvorrichtung 704.2 auch von einem mobilen Endgerät 732, welches tatsächlich vor der ersten Zugangsvorrichtung 704.1 positioniert ist, empfangen werden kann. In diesem Fall empfängt das mobile Endgerät 732 beide Zusatzdatensätze oder nur den "falschen" Zusatzdatensatz. Während im zuletzt genannten Fall die falsche Zugangsvorrichtung angesteuert und freigegeben wird, ist es beim erst genannten Fall nicht möglich, in eindeutiger Weise die anzusteuernde Zugangsvorrichtung zu bestimmen.

Zwar ist es aus dem Stand der Technik bekannt, Sendevorrichtungen mit Richtantennen einzusetzen, um die Sendefeldstärke richtungsabhängig zu beeinflussen und damit Sendefelder besser zu formen bzw. zu dimensionieren. Doch in der Praxis kommt es auch hierbei, beispielsweise aufgrund von nicht vermeidbaren Ungenauigkeiten bei der Einstellung sowie durch Reflexionen und Interferenzen, weiter zu Fehlern. Zudem muss gewährleistet sein, dass ein Sendefeld von einem mobilen Endgerät unabhängig von seiner Lage in einem Fahrzeug empfangen werden kann. Ein zuverlässiger Betrieb eines solchen Parksystems ist daher problematisch.

Die Druckschrift WO 2017/063089 A1 offenbart ein computergestütztes System zur Verwaltung eines Parkplatzes umfassend, einen Beacon oder einen Positionssensor, der mit einem intelligenten Gerät kommuniziert, um das intelligente Gerät zu lokalisieren, ohne dass es seinen eigenen Standort bestimmen muss, einen Fahrzeugsensor, um die Anwesenheit eines Fahrzeugs zu erfassen, und einen computerimplementierten Server, der in der Lage ist, aus der Identifikation des Beacons den Standort des intelligenten Geräts zu bestimmen oder von dem Positionssensor zu empfangen, wobei der Server das Einfahren oder Ausfahren des Fahrzeugs autorisiert, wenn der Status des intelligenten Geräts die Akzeptanz anzeigt und das intelligente Gerät und das Fahrzeug sich beide an demselben geeigneten Ort befinden. Darüber hinaus betrifft die Druckschrift DE 10 2014 018 190 A1 ein Zugangskontrollsystem für einen Verkehrsraum, umfassend eine Sperrvorrichtung mit zumindest einem steuerbaren Sperrelement zum Sperren und Öffnen eines Zugangs zu dem Verkehrsraum, und eine Steuereinheit, die bei Vorliegen einer Zugangsberechtigung zu dem Verkehrsraum das jeweilige Sperrelement öffnet, wobei im Bereich zumindest eines Sperrelements zumindest ein Sensor zum Orten einer mobilen Datenverarbeitungseinheit und zum Empfangen einer Zugangsberechtigung von der mobilen Datenverarbeitungseinheit angeordnet ist, und dass die Steuereinheit beim Orten einer mobilen Datenverarbeitungseinheit mit zugehöriger Zugangsberechtigung im Zufahrbereich des jeweiligen Sperrelements dieses öffnet. Schließlich ist aus der EP 2 312 537 A1 ein System bekannt, bei dem ein Kopplungszustand eines mobilen Endgeräts in einem Fahrzeug erkannt und übertragen wird.

Somit liegt der vorliegenden Anmeldung die Aufgabe zugrunde, ein Parksystem bereitzustellen, welches einen zuverlässigeren Betrieb bei gleichzeitig hohem Nutzerkomfort ermöglicht.

Die Aufgabe wird gemäß einem ersten Aspekt der Anmeldung mit einem Parksystem gemäß Anspruch 1 gelöst. Das Parksystem umfasst mindestens eine Zugangsanordnung mit mindestens einer Zugangsvorrichtung, eingerichtet zur Kontrolle einer Durchfahrt von einem ersten Bereich mit einem Zufahrtsabschnitt in einen weiteren Bereich, mindestens eine erste, der Zugangsvorrichtung zugeordnete Nahfeld-Sendevorrichtung, eingerichtet zum Aussenden eines ersten Sendefelds, mindestens ein mobiles Endgerät, wobei das erste Sendefeld mindestens einen ersten, von dem in dem Zufahrtsabschnitt befindlichen mobilen Endgerät empfangbaren

Zugangsdatensatz umfasst, mindestens eine zweite, der Zugangsvorrichtung zugeordnete Nahfeld-Sendevorrichtung, eingerichtet zum Aussenden eines zweiten Sendefelds, wobei das zweite Sendefeld mindestens einen zweiten, von dem in dem Zufahrtsabschnitt befindlichen mobilen Endgerät empfangbaren Zugangsdatensatz umfasst, wobei sowohl das erste Sendefeld als auch das zweite Sendefeld den gesamten Zufahrtsabschnitt im Wesentlichen abdeckt, wobei der erste Zugangsdatensatz eine Funktion des zweiten Zugangsdatensatzes ist, und mindestens eine Auswerteeinrichtung, eingerichtet zum Bestimmen der zugeordneten Zugangsvorrichtung, zumindest basierend auf einer Auswertung der funktionalen Beziehung des durch das mobile Endgerät empfangenen ersten Zugangsdatensatzes zu dem durch das mobile Endgerät empfangenen zweiten Zugangsdatensatz, mindestens eine Steuervorrichtung, eingerichtet zum Freigeben einer Durchfahrt durch eine bestimmte Zugangsvorrichtung abhängig von dem Auswerteergebnis, wobei die Steuervorrichtung mindestens ein Empfangsmodul umfasst, eingerichtet zum Empfangen einer Zugangsnachricht von dem mobilen Endgerät, wobei die Zugangsnachricht mindestens einen zu dem empfangenen ersten Zugangsdatensatz und dem empfangenen zweiten Zugangsdatensatz korrespondierenden dritten Zugangsdatensatz umfasst, wobei die Zugangsnachricht zumindest eine dem mobilen Endgerät und/oder dem Nutzer des mobilen Endgeräts zugeordnete Kennung umfasst, wobei die Zugangsnachricht mindestens einen Zustandsdatensatz des mobilen Endgeräts umfasst, wobei der Zustandsdatensatz mindestens einen Kopplungszustand des mobilen Endgeräts mit einer Kopplungsvorrichtung des Fahrzeugs umfasst, wobei nach dem Empfang von Zugangsnachrichten durch die Steuervorrichtung mindestens ein Zustandsdatensatz der Zugangsnachrichten geprüft wird, wobei wenn zwei Zugangsnachrichten mit Kennungen von unterschiedlichen mobilen Endgeräten empfangen werden und die Auswertungen der zwei Zugangsnachrichten als Ergebnis dieselbe Zugangsvorrichtung haben, von den mindestens zwei möglichen mobilen Endgeräten ein mobiles Endgerät abhängig von den jeweiligen Kopplungszuständen bestimmt wird, wobei wenn aus einer der zwei Zugangsnachrichten hervorgeht, dass ein mobiles Endgerät derzeit mit einer Kopplungsvorrichtung des Fahrzeugs gekoppelt ist, dieses mobile Endgerät bestimmt wird und die zugehörige Zugangsnachricht mit der Kennung von diesem mobilen Endgerät weiterverarbeitet wird.

Indem im Gegensatz zum Stand der Technik mindestens zwei Sendevorrichtungen (eindeutig) einer einzelnen Zugangsvorrichtung zugeordnet sind, ist diese Zugangsvorrichtung in zuverlässiger und insbesondere eindeutiger Weise durch Auswerten der ersten und zweiten Zugangsdatensätze der aussendenden Sendevorrichtungen bestimmbar. So mag es passieren, dass ein weiteres Sendefeld von einer einer benachbarten Zugangsvorrichtung zugeordneten Sendevorrichtung zusätzlich von einem mobilen Endgerät empfangen wird. Aus den drei empfangenen Zusatzdatensätzen kann jedoch in zuverlässiger Weise die tatsächlich anzusteuernde Zugangsvorrichtung bestimmt werden. Ein zuverlässigerer Betrieb des Parksystems bei gleichzeitig hohem Nutzerkomfort wird erreicht.

Das Parksystem für eine Parkvorrichtung, wie ein Parkplatz, Parkhaus oder dergleichen, verfügt über eine oder mehrere Zugangsanordnung/en. Eine Zugangsanordnung umfasst eine oder mehrere Zugangsvorrichtung/en. Vorzugsweise kann als Zugangsanordnung eine Schranke mit mindestens einem an einer Säule schwenkbar angeordneten Schrankenbaum vorgesehen sein. Es versteht sich, dass als Sperrmittel in einer Zugangsanordnung aber auch ein Rolltor, Schwenktor, Sektionaltor, versenkbarer Poller und dgl. Verwendet werden kann. Weiter kann die Zugangsanordnung auch ohne Sperrmittel auskommen und die Durchfahrt mittels eine Lichtsignals kontrollieren.

Vor einer Zugangsvorrichtung (in Durchfahrtsrichtung gesehen) ist in dem ersten Bereich ein Zufahrabschnitt vorgesehen, den ein Fahrzeug, welches durch die Zugangsvorrichtung fahren wird, zuvor passieren muss. Mit der Zugangsvorrichtung wird die Durchfahrt eines Fahrzeugs von einem ersten Bereich in einen weiteren Bereich kontrolliert bzw. gesteuert. Beispielsweise ist bei einer Parkvorrichtung mindestens eine Zugangsanordnung mit je einer Zugangsvorrichtung vorgesehen, um die Durchfahrt von einem nicht kontrollierten Bereich in einen kontrollierten Bereich, beispielsweise den Parkbereich der Parkvorrichtung, zu steuern. Mit anderen Worten kann das Einfahren in die Parkvorrichtung durch die genau eine Zugangsvorrichtung (Einfahrt) gesteuert werden. Alternativ oder zusätzlich kann bei der Parkvorrichtung mindestens eine Zugangsanordnung mit mindestens einer Zugangsvorrichtung vorgesehen sein, um die Durchfahrt von dem kontrollierten Bereich in den nicht kontrollierten Bereich zu steuern. Mit anderen Worten kann das Ausfahren aus der Parkvorrichtung durch genau eine Zugangsvorrichtung (Ausfahrt) gesteuert werden. Es versteht sich dabei, dass eine Parkvorrichtung durchaus mehrere Einfahrten und Ausfahrten ausweisen kann.

Vorzugsweise jeder Zugangsvorrichtung einer Parkanordnung sind in eindeutiger Weise jeweils mindestens zwei lokale Sendevorrichtungen zugeordnet. Unter einer Zuordnung ist insbesondere zu verstehen, dass für jede Zugangsvorrichtung mindestens eine erste lokale Sendevorrichtung und mindestens eine zweite lokale Sendevorrichtung vorgesehen sind. Hierbei deckt sowohl das erste Sendefeld der ersten lokalen Sendevorrichtung als auch das zweite Sendefeld der zweiten lokalen Sendevorrichtung einen bestimmten Teil des Zufahrtsabschnitts des ersten Bereichs im Wesentlichen ab, vorliegend nahezu den gesamten Zufahrtsabschnitt. Mit anderen Worten muss ein Fahrzeug für die Durchfahrt der Zugangsvorrichtung das erste und das zweite Sendefeld passieren.

Das erste Sendefeld umfasst, insbesondere überträgt, wenigstens einen ersten Zugangsdatensatz und das zweite Sendefeld wenigstens einen zweiten Zugangsdatensatz. Der erste Zugangsdatensatz und der zweite Zugangsdatensatz sind derart gebildet, dass die aussendenden Sendevorrichtungen bestimmt werden können, so dass damit die diesen aussendenden Sendevorrichtungen (eindeutig) zugeordnete Zugangsvorrichtung (eindeutig) bestimmt werden kann. Der erste und der zweite Zugangsdatensatz können sich hierbei voneinander unterscheiden. Ein Zugangsdatensatz kann beispielsweise einen eindeutigen Code umfassen.

Eine erste (oder zweite) lokale Sendevorrichtung ist eingerichtet, vorzugsweise (quasi) kontinuierlich das erste (bzw. zweite) Sendefeld auszusenden. Eine derartige Sendevorrichtung ist insbesondere eine Sendevorrichtung mit einer minimalen Reichweite von zumindest 2 m, vorzugweise mindestens 2,5 m, und einer maximalen Reichweite von höchstens 5 m, vorzugsweise höchstens 4 m. Beispielsweise kann RFID-Technologie, Infrarot-Technologie, WLAN-Technologie und/oder eine Schall-Technologie verwendet werden. Vorzugsweise kann das erste (bzw. zweite) Sendefeld ein von einem Bluetooth-Beacon ausgesandtes Bluetooth-Sendefeld sein. Besonders bevorzugt kann als Sendevorrichtung ein BLE (Bluetooth Low Energy) Beacon eingesetzt werden.

Ein von einer derartigen Sendevorrichtung ausgesendetes Sendefeld ist von einem sich in Reichweite der Sendevorrichtung befindlichen mobilen Endgerät empfangbar. Beispielhafte mobile Endgeräte sind Smartphones, Tablet-Computer, mobile Spielkonsolen, Laptops, Netbooks, Datenbrillen, Smart-Watches und ähnliche Wearables. Ferner ist vorliegend unter einem mobilen Endgerät auch ein in dem Fahrzeug integriertes Gerät (z.B. Navigationssystem, etc.) zu verstehen.

Für eine besonders zuverlässige und eindeutige Auswertung ist der erste Zugangsdatensatz erfindungsgemäß eine Funktion des zweiten Zugangsdatensatzes.

Der Begriff der Funktion ist hier nicht beschränkt auf die mathematische Definition einer Funktion. Erfindungsgemäß ist jegliches Verfahren gemeint, welches es ermöglicht, aus einem ersten Datensatz auf einen zweiten Datensatz zu schließen. Dies kann in einer Ausführungsform durch eine mathematische Funktion erfolgende, insbesondere durch eine umkehrbar-eindeutige Funktion realisiert sein, in einer anderen Ausführungsform beispielsweise durch eine Verweistabelle. In einer beispielhaften Ausführungsform kann folgende funktionale Beziehung zwischen dem ersten Zugangsdatensatz Di und dem zweiten Zugangsdatensatz $D_2$ vorhanden sein:

$$D_1 = f(D_2). \tag{a}$$

Beispielsweise kann in diesem Fall $D_2$ wie folgt gebildet sein:

$$D_2 = g(s, t),$$

wobei s eine Zufallszahl, t der Aussendezeitpunkt und g eine Verknüpfung (z.B. eine Funktion) der Parameter s und t sein können. In einfacher Weise kann anhand einer Auswertung der funktionalen Beziehung der Zugangsdatensätze von zwei lokalen Sendevorrichtungen, die eindeutig einer einzelnen Zugangsvorrichtung zugeordnet sind, diese Zugangsvorrichtung bestimmt werden.

Gemäß einer weiteren bevorzugten Ausführungsform kann die erste lokale Sendevorrichtung an einem ersten Seitenrand des Zufahrtsabschnitts der Zugangsvorrichtung angeordnet sein. Die zweite lokale Sendevorrichtung kann an einem zweiten, dem ersten Seitenrand gegenüberliegenden Seitenrand des Zufahrtsabschnitts der Zugangsvorrichtung angeordnet sein. Indem die lokalen Sendevorrichtungen einer Zugangsvorrichtung an gegenüberliegenden Seiten des Zufahrtsabschnitts angeordnet sind, kann in einfacher Weise durch die entsprechenden Sendefelder eine ausreichende Abdeckung des Zufahrtsabschnitts gewährleistet werden. Insbesondere kann ferner sichergestellt werden, dass bei zwei benachbart angeordneten Zugangsvorrichtungen mit entsprechend benachbart angeordneten Zufahrtsabschnitten zumindest jeweils eine lokale Sendevorrichtung maximal entfernt von der jeweils nicht zugeordneten Zugangsvorrichtung positioniert ist. Hierdurch kann in zuverlässiger Weise sichergestellt werden, dass ein mobiles Endgerät im Bereich eines ersten Zufahrtsabschnitts zumindest nicht beide Sendefelder der benachbarten zweiten Zugangsvorrichtung empfangen kann. Dies kann insbesondere noch durch eine gerichtete Abstrahlung der Sendefelder der lokalen Sendevorrichtungen unterstützt werden. Des Weiteren kann die Selektivität am Endgerät erhöht werden durch intelligent angeordnete Reflektoren und/oder Absorber und/oder Schirm- und Dämpfelemente im Bereich eines Zufahrtsabschnitts.

Darüber hinaus umfasst das Parksystem mindestens eine Auswerteeinrichtung. Die Auswerteeinrichtung ist eingerichtet zum Bestimmen der zugeordneten Zugangsvorrichtung, zumindest basierend auf dem empfangenen ersten Zugangsdatensatz und dem empfangenen zweiten Zugangsdatensatz. So wird aus dem ersten und dem zweiten Zugangsdatensatz die zugehörige Zugangsvorrichtung bestimmt, durch Auswerten der obigen funktionalen Beziehung der Zugangsdatensätze. Das Auswerteergebnis wird dann berücksichtigt bei der Ansteuerung und insbesondere Freigabe einer Durchfahrt durch eine Zugangsanordnung.

Das Parksystem umfasst mindestens eine Steuervorrichtung, eingerichtet zum Freigeben einer Durchfahrt durch eine bestimmte Zugangsvorrichtung. Die Steuervorrichtung kann ein Steuermodul umfassen, eingerichtet zum Ansteuern der bestimmten Zugangsvorrichtung abhängig von dem Auswerteergebnis. Das Auswerteergebnis kann dem Steuermodul zur Verfügung gestellt werden. Beispielsweise kann die Steuervorrichtung die Auswerteeinrichtung umfassen. Abhängig von dem Auswerteergebnis kann ein Ansteuersignal erzeugt und beispielsweise an einen Aktor (z.B. ein Motor) und/oder ein Signal der bestimmten Zugangsvorrichtung übertragen werden, um eine Durchfahrt zu erlauben oder zu verweigern. Mit anderen Worten kann hierdurch die Durchfahrt durch eine Zugangsvorrichtung freigegeben (oder gesperrt) werden. Die Steuervorrichtung kann zumindest teilweise intergiert sein in einer lokalen Rechenvorrichtung der Parkvorrichtung, in einer entfernt angeordneten zentralen Rechenvorrichtung und/oder in der Zugangsvorrichtung.

Die Steuervorrichtung umfasst mindestens ein Empfangsmodul, eingerichtet zum Empfangen einer Zugangsnachricht von dem mobilen Endgerät. Die Zugangsnachricht umfasst mindestens einen dritten Zugangsdatensatz, der zu dem ersten empfangenen Zugangsdatensatz und dem zweiten empfangenen Zugangsdatensatz korrespondiert. Beispielsweise kann das mobile Endgerät oder der fahrzeugintegrierte Sender die Auswerteeinrichtung umfassen. In diesem Fall kann der dritte Zugangsdatensatz ein Auswertedatensatz sein. Der Auswertedatensatz kann zumindest eine Information über die in dem Auswerteschritt bestimmte Zugangsvorrichtung umfassen. Alternativ oder zusätzlich können der erste und der zweite Zugangsdatensatz beispielweise zwei dritte Zugangsdatensätze bilden. Diese dritten Zugangsdatensätze können dann beispielweise einer Auswerteeinrichtung der Steuervorrichtung zur Verfügung gestellt werden. Es versteht sich, dass in diesem Fall ein oder mehrere weitere Zugangsdatensatz/-sätze als dritte Zugangsdatensätze übertragen werden. Diese können von benachbart angeordneten lokalen Sendevorrichtungen benachbarter Zugangsvorrichtungen stammen. Wie oben beschrieben wurde, kann in dem Auswerteschritt dennoch in eindeutiger Weise die korrekte Zugangsvorrichtung bestimmt werden.

Die Zugangsnachricht kann weitere Datensätze umfassen, wie einen Zeitstempel. Die Zugangsnachricht umfasst zumindest eine dem mobilen Endgerät und/oder dem Nutzer des mobilen Endgeräts zugeordnete Kennung. Beispielsweise kann vorgesehen sein, dass eine Durchfahrt durch die Zugangsvorrichtung nur berechtigten Nutzern ermöglicht wird. Dies kann durch eine Prüfung der Kennung sichergestellt werden, beispielsweise durch Vergleichen der Kennung mit einer Positiv-Liste oder Negativ-Liste.

Die empfangbare Zugangsnachricht umfasst (zusätzlich) mindestens einen Zustandsdatensatz des mobilen Endgeräts. Der Zustandsdatensatz repräsentiert mindestens einen Kopplungszustand des mobilen Endgeräts mit einer Kopplungsvorrichtung des Fahrzeugs.

Beispielsweise kann der Zugangsdatensatz einen Statusindikator (Flag) umfassen, um anzuzeigen, ob eine Kopplung vorliegt (z.B.: Statusindikator ist gesetzt) oder nicht (z.B. Statusindikator ist nicht gesetzt). Die Kopplungsvorrichtung kann ein Freisprechsystem des Fahrzeugs sein und/oder eine in einer Schnittstelle (z.B. OBD (On-Board-Diagnose) Schnittstelle) eingesteckte Vorrichtung (z.B. ein speziell ausgebildeter Park-Dongle). Eine Kopplung kann eine Bluetooth-Verbindung sein oder eine andere Verbindung (z.B. WLAN, Infrarot, etc.). Weist das mobile Endgerät eine entsprechende Kopplung auf, kann insbesondere ein entsprechender Indikator in die Zugangsnachricht eingefügt werden.

Insbesondere kann es bei mehreren mobilen Endgeräten in einem Fahrzeug zu dem Fall kommen, dass gemäß dem Stand der Technik keine eindeutige Zuordnung eines Parkvorgangs zu einem einzelnen Nutzer/mobilen Endgerät möglich ist. In der Regel ist es wünschenswert, dem Fahrer den Parkvorgang zuzuordnen. Hierbei ist erkannt worden, dass im Allgemeinen das mobile Endgerät des Fahrers mit einer Kopplungsvorrichtung des Fahrzeugs gekoppelt ist. Somit ist der Kopplungszustand ein Indiz für die Auswahl eines mobilen Endgeräts aus einer Mehrzahl von Endgeräten, die in einem Fahrzeug vorhanden sein können.

Beim Ausfahren aus einer Parkvorrichtung kann alternativ oder zusätzlich zur Identifizierung eines gewünschten mobilen Endgeräts aus einer Mehrzahl von mobilen Endgeräten auf die Daten, die bei der Einfahrt gespeichert wurden, zurückgegriffen werden. So können die Kennungen der Nutzer/mobilen Endgeräte mit den bei der Einfahrt gespeicherten Kennungen der Nutzer/mobilen Endgeräte verglichen werden. Wenn eine Korrespondenz detektiert wird, kann hierdurch die zu verwendende Kennung bestimmt werden.

Darüber hinaus kann auch vorgesehen sein, dass eine Kommunikation mit den Nutzern gestartet wird und ein Nutzer aus einer Mehrzahl von Fahrzeuginsassen bestätigt, dass der Parkvorgang ihm zugeordnet werden soll, beispielsweise durch Senden einer Antwort auf eine entsprechende Nachricht (insbesondere eine Push-Nachricht).

Darüber hinaus kann es vorkommen, dass Nutzer mit einem mobilen Endgerät, jedoch ohne Fahrzeug, das erste Sendefeld und das zweite Sendefeld passieren (beispielsweise zu Fuß). Um eine ungewollte Freigabe einer Zugangsvorrichtung und/oder beispielsweise eine ungewollte Abrechnung eines Parkvorgangs zu verhindern, kann das Parksystem gemäß einer weiteren Ausführungsform mindestens eine der Zugangsvorrichtung zugeordnete Fahrzeugdetektionsvorrichtung umfassen. Die Fahrzeugdetektionsvorrichtung, beispielsweise eine Induktionsschleife, kann zum Detektieren eines Fahrzeugs vor der Zugangsanordnung eingerichtet sein. Die Steuervorrichtung kann mindestens ein Auswertemodul umfassen, eingerichtet zum Bestimmen, ob bei der bestimmten Zugangsvorrichtung ein Fahrzeug detektiert wird. Insbesondere kann (unmittelbar) nach oder während des oben beschriebenen Auswerteschritts geprüft werden, ob tatsächlich ein Fahrzeug an der bestimmten Zugangsvorrichtung präsent ist. Ist dies nicht der Fall, kann der Vorgang abgebrochen werden. Andernfalls kann beispielsweise eine entsprechende Ansteuerung der Zugangsvorrichtung erfolgen. Das Auswertemodul kann beispielsweise teilweise in der Auswerteeinrichtung integriert sein. Es versteht sich, dass neben einer Induktionsschleife auch weitere Vorrichtungen verwendet werden können, mit denen die Anwesenheit eines Fahrzeugs vor der Zugangsanordnung festgestellt werden kann. Dies umfasst beispielsweise Kameras, Bildverarbeitungssysteme, Ultraschallsensoren, Drucksensoren, Fahrzeugwaagen, Lichtschranken, etc.

Um eine ungewollte Freigabe einer Zugangsvorrichtung und/oder eine ungewollte Abrechnung eines Parkvorgangs in anderer oder ergänzender Form zu verhindern, kann das Parksystem gemäß einer weiteren Ausführungsform wenigstens eine vierte lokale Sendevorrichtung innerhalb des kontrollierten Bereichs aufweisen. Die wenigstens eine vierte lokale Sendevorrichtung kann einen weiteren Code (bestehend aus zum Beispiel einer Senderkennung und einem Zeitstempel) senden, welcher für Endgeräte, die die Zugangsvorrichtung erfolgreich passiert haben, empfangbar ist. Endgeräte, die sich an der Zugangsvorrichtung aufgehalten haben, aber sich anschließend nicht in dem kontrollierten Bereich befinden (z.B. ungewollte "Nutzer", die sich zu Fuß in der Nähe der Zugangsvorrichtung befunden haben) können auf dieser Weise sicher von einer ungewollten Abrechnung ausgeschlossen werden. In besonderer Weise könnte auch ein Zeitintervall festgelegt und überwacht werden: Endgeräte, welche den Code der wenigsten einen vierten Sendervorrichtung empfangen haben, aber bei denen das Zeitintervall vom Empfang der Zugangsdatensätze (von den ersten und zweiten Sendevorrichtungen) bis zum Empfang des weiteren Codes (von der vierten Sendevorrichtung) größer ist als vom Parksystem definiert, können von der Abrechnung ausgeschlossen werden. So können beispielsweise (langsame) Fußgänger und von Nutzern in einem Fahrzeug unterschieden werden.

Das mobile Endgerät kann vorzugsweise eine Zugangsanwendung (z.B. eine so genannte App) umfassen. Die Zugangsanwendung kann insbesondere eingerichtet sein zur Verarbeitung von empfangenen Zugangsdatensätzen und/oder zur Detektion eines Kopplungszustands. Beispielsweise kann die Zugangsanordnung ein Verarbeitungsmittel zur Generierung einer oben beschriebenen Zugangsnachricht umfassen. Das Verarbeitungsmittel kann eine Aussendung dieser Zugangsnachricht durch das mobile Endgerät bewirken. Die Kommunikationsadresse eines bestimmten Empfängers kann in dem mobilen Endgerät hinterlegt sein (z.B. Kommunikationsadresse der zentralen Rechenvorrichtung) und/oder beispielsweise über die ersten und zweiten Sendefelder übertragen werden.

Um eine manuelle Aktivierung zu vermeiden und eine zügige, nutzerfreundliche Durchfahrt durch eine Zugangsvorrichtung zu ermöglichen, kann das Parksystem gemäß einer weiteren Ausführungsform mindestens eine dritte, der Zugangsanordnung zugeordnete Sendevorrichtung umfassen. Die dritte Sendevorrichtung kann zum Aussenden eines dritten Sendefelds eingerichtet sein, übertragend einen Aktivierungsdatensatz zur Aktivierung einer auf dem mobilen Endgerät installierten Zugangsanwendung. Indem die Zugangsanwendung bereits vor dem Erreichen des Zufahrtsabschnitts gestartet wird, kann diese bei Erreichen des Zufahrtsabschnitts die empfangenen Zugangsdatensätze unmittelbar verarbeiten. Wartezeiten können zumindest reduziert werden. Die mindestens eine dritte Sendevorrichtung, beispielsweise eine lokale Sendevorrichtung, kann derart positioniert sein, dass ein Fahrzeug, welches in die Parkvorrichtung fahren wird (oder aus der Parkvorrichtung fahren wird), das dritte Sendefeld passieren muss. Ferner kann die mindestens eine dritte Sendevorrichtung derart positioniert sein, dass die Fahrtzeit zum Zufahrtsabschnitt zumindest größer als die Zeitdauer ist, die zum Starten der Zugangsanwendung (wahrscheinlich) benötigt wird.

Alternativ oder zusätzlich kann vorgesehen sein, dass das mobile Endgerät über einen Positionssensor (z.B. GPS Sensor, etc.) verfügt. Bei Erreichen von mindestens einem vorgebbaren geographischen Bereich kann eine automatische Aktivierung (Aufweckung) der Zugangsanwendung erfolgen.

Vorzugsweise kann die erste lokale Sendevorrichtung und/oder die zweite lokale Sendevorrichtung eine Richtantenne umfasst/en. Hierdurch kann ein Zufahrtsabschnitt mit höherer Präzision durch ein Sendefeld abgedeckt werden.

Wie bereits beschrieben wurde, ist die Zuordnung von mindestens zwei lokalen Sendevorrichtungen zu einer einzelnen Zugangsvorrichtung sinnvoll, insbesondere bei einer Zugangsanordnung mit einer Mehrzahl (>1) von Zugangsvorrichtungen. Gemäß einer besonders bevorzugten Ausführungsform kann die Zugangsanordnung mindestens zwei benachbart zueinander angeordnete Zugangsvorrichtungen umfassen. Jeder der benachbart zueinander angeordneten Zugangsvorrichtungen kann zumindest eine (zuvor beschriebene) erste lokale Sendevorrichtung und eine (zuvor beschriebene) zweite lokale Sendevorrichtung zugeordnet sein. Eine (zuvor beschriebene) Auswerteeinrichtung kann eingerichtet sein (wie oben beschrieben) zum Bestimmen der zugeordneten Zugangsvorrichtung aus den zumindest zwei Zugangsvorrichtungen, zumindest basierend auf dem ersten empfangenen Zugangsdatensatz und dem zweiten empfangenen Zugangsdatensatz.

Darüber hinaus kann zwischen benachbarten Zufahrtsabschnitten, insbesondere zwischen den benachbarten Seitenrändern, eine für die Sendefelder undurchdringbare bzw. schwer durchdringbare oder (stark) dämpfende Abschirmung angeordnet sein (z.B. in Form einer entsprechend gebildeten Trennwand aus elektrisch leitfähigem Material oder dergleichen).

Ferner kann eine Zuordnung einer ersten und einer zweiten lokalen Sendevorrichtung zu einer Zugangsvorrichtung gesteuert werden durch eine lokale Rechenvorrichtung oder durch eine entfernt angeordnete zentrale Rechenvorrichtung. Beispielsweise kann jede dieser lokalen Sendevorrichtungen eine Kommunikationsverbindung zu einer Rechenvorrichtung aufweisen. Eine Rechenvorrichtung kann eingerichtet sein, den ersten Zugangsdatensatz und den zweiten Zugangsdatensatz derart bereitzustellen (z.B. zu generieren), dass eine eindeutige Zuordnung zu der Zugangsvorrichtung vorliegt. Diese Zugangsdatensätze können dann an die entsprechenden lokalen Sendevorrichtungen über die Kommunikationsverbindung übertragen werden. Eine ggf. erforderliche Anpassung und Änderung der Zugangsdatensätze kann in einfacher Weise gesteuert werden. Zudem kann in diesem Fall die Auswerteeinrichtung vorzugsweise integriert sein in der entsprechenden Rechenvorrichtung, die die Zugangsdatensätze bereitgestellt hat. Eine Auswertung kann dann basierend auf den bereitgestellten Zugangsdatensätzen durchgeführt werden.

Ein weiterer Aspekt der Anmeldung ist ein Verfahren nach Anspruch 8 zum Betreiben eines Parksystems, insbesondere eines zuvor beschriebenen Parksystems, wobei das Parksystem mindestens eine Zugangsanordnung mit mindestens einer Zugangsvorrichtung und mindestens ein mobiles Endgerät umfasst. Das Verfahren umfasst:

- Aussenden eines ersten Sendefelds mit mindestens einem ersten Zugangsdatensatz von einer ersten, der Zugangsvorrichtung zugeordneten Nahfeld-Sendevorrichtung,
- Aussenden eines zweiten Sendefelds mit mindestens einem zweiten Zugangsdatensatz von einer zweiten, der Zugangsvorrichtung zugeordneten Nahfeld-Sendevorrichtung,
- wobei das erste Sendefeld und das zweite Sendefeld von dem mobilen Endgerät empfangbar sind,
- wobei sowohl das erste Sendefeld als auch das zweite Sendefeld den gesamten Zufahrtsabschnitt im Wesentlichen abdeckt,
- wobei der erste Zugangsdatensatz eine Funktion des zweiten Zugangsdatensatzes ist,
- Bestimmen der zugeordneten Zugangsvorrichtung, zumindest basierend auf einer Auswertung der funktionalen Beziehung des durch das mobile Endgerät empfangenen ersten Zugangsdatensatzes zu dem durch das mobile Endgerät empfangenen zweiten Zugangsdatensatz in einem Auswerteschritt,
- Freigeben, durch eine Steuervorrichtung, einer Durchfahrt durch die bestimmte Zugangsvorrichtung zumindest basierend auf dem Auswerteergebnis des Auswerteschritts,
- wobei die Steuervorrichtung durch das Empfangsmodul der Steuervorrichtung eine Zugangsnachricht von dem mobilen Endgerät empfängt,
- wobei die Zugangsnachricht mindestens einen dritten Zugangsdatensatz umfasst, der zu dem empfangenen ersten Zugangsdatensatz und dem empfangenen zweiten Zugangsdatensatz korrespondiert, wobei die Zugangsnachricht zumindest eine dem mobilen Endgerät und/oder dem Nutzer des mobilen Endgeräts zugeordnete Kennung umfasst,
- wobei nach dem Empfang von Zugangsnachrichten durch die Steuervorrichtung mindestens ein Zustandsdatensatz der Zugangsnachrichten geprüft wird, wobei wenn zwei Zugangsnachrichten mit Kennungen von unterschiedlichen mobilen Endgeräten empfangen werden und die Auswertungen der zwei Zugangsnachrichten als Ergebnis dieselbe Zugangsvorrichtung haben, von den mindestens zwei möglichen mobilen Endgeräten ein mobiles Endgerät abhängig von den jeweiligen Kopplungszuständen bestimmt wird, wobei wenn aus einer der zwei Zugangsnachrichten hervorgeht, dass ein mobiles Endgerät derzeit mit einer Kopplungsvorrichtung des Fahrzeugs gekoppelt ist, dieses mobile Endgerät bestimmt wird und die zugehörige Zugangsnachricht mit der Kennung von diesem mobilen Endgerät weiterverarbeitet wird.

Eine Zugangsanwendung umfasst mindestens ein Empfangsmittel zum Erhalten von einem ersten empfangenen Zugangsdatensatz und mindestens einem zweiten empfangenen Zugangsdatensatz. Die Zugangsanwendung umfasst weiter mindestens ein Verarbeitungsmittel zum Verarbeiten des erhaltenen ersten Zugangsdatensatzes und des erhaltenen zweiten Zugangsdatensatzes, derart, dass eine Aussendung einer Zugangsnachricht bewirkt wird, umfassend mindestens einen zu dem ersten Zugangsdatensatz und dem zweiten Zugangsdatensatz korrespondierenden dritten Zugangsdatensatz.

Die Zugangsanwendung, insbesondere ein Computerprogramm, kann insbesondere auf dem mobilen Endgerät installierbar sein.

Gemäß einer bevorzugten Ausführungsform der anmeldungsgemäßen Zugangsanwendung kann die Zugangsanwendung mindestens eine (zuvor beschriebene) Auswerteeinrichtung umfassen, eingerichtet zum Bestimmen der zugeordneten Zugangsvorrichtung, zumindest basierend auf dem erhaltenen ersten Zugangsdatensatz und dem erhaltenen zweiten Zugangsdatensatz, in einem Auswerteschritt. Das Verarbeitungsmittel kann eingerichtet sein, einen dritten Zugangsdatensatz basierend auf dem Auswerteergebnis zu generieren.

Die Merkmale der Parksysteme, Vorrichtungen, Verfahren, Einrichtungen und Zugangsanwendungen und/oder Computerprogramme sind frei miteinander kombinierbar. Insbesondere können Merkmale der Beschreibung und/oder der abhängigen Ansprüche eigenständig erfinderisch sein, auch unter vollständiger oder teilweiser Umgehung von Merkmalen der unabhängigen Ansprüche, in Alleinstellung oder frei miteinander kombiniert.

Es gibt nun eine Vielzahl von Möglichkeiten, das anmeldungsgemäße Parksystem, das anmeldungsgemäße Verfahren, die anmeldungsgemäße Zugangsanwendung und das anmeldungsgemäße mobile Endgerät auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:

Fig. 1     eine schematische Ansicht eines Ausführungsbeispiels eines Parksystems gemäß der vorliegenden Erfindung;

Fig. 2     eine schematische Ansicht eines weiteren Ausführungsbeispiels eines Parksystems gemäß der vorliegenden Erfindung;

Fig. 3     eine schematische Ansicht eines Beispiels eines mobilen Endgerät gemäß der vorliegenden Anmeldung mit einem Beispiel einer Zugangsanwendung gemäß der vorliegenden Anmeldung;

Fig. 4     eine schematische Ansicht eines weiteren Ausführungsbeispiels eines Parksystems gemäß der vorliegenden Erfindung;

Fig. 5     ein Diagramm eines Beispiels eines Verfahrens gemäß der vorliegenden Anmeldung,

Fig. 6     ein Diagramm eines Ausführungsbeispiels eines Verfahrens gemäß der vorliegenden Anmeldung, und

Fig. 7     eine schematische Ansicht eines Ausführungsbeispiels eines Parksystems gemäß dem Stand der Technik.

Nachfolgend werden für gleiche Elemente gleiche Bezugszeichen verwendet.

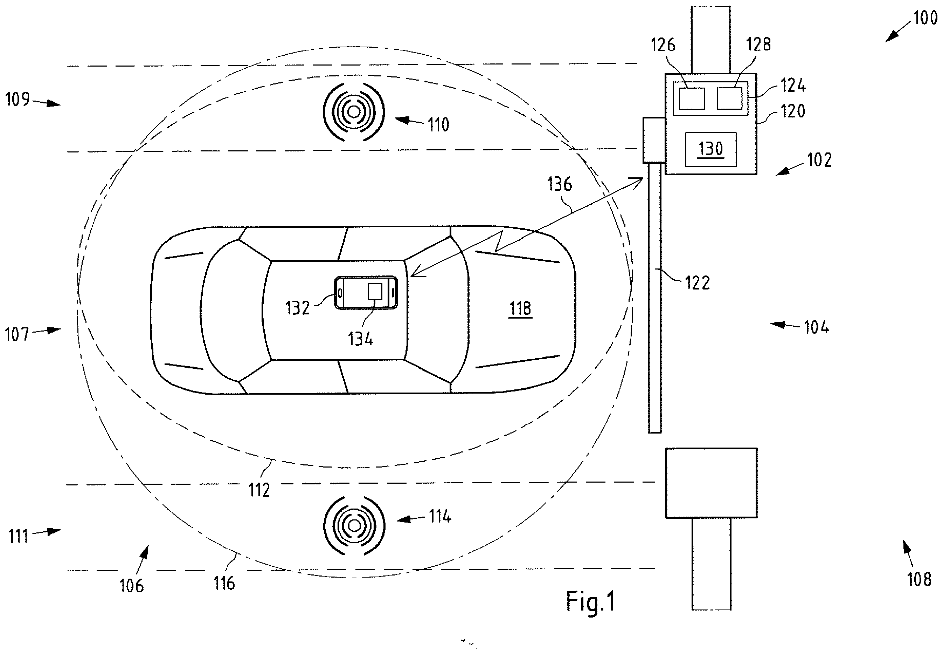

Die Figur 1 zeigt eine schematische Draufsicht eines Beispiels eines Parksystems 100 gemäß der vorliegenden Anmeldung. Das dargestellte Parksystem umfasst eine Zugangsanordnung 102 mit einer Zugangsvorrichtung 104. Es versteht sich, dass gemäß anderen Varianten der Anmeldung mehrere Zugangsanordnungen und/oder mehrere Zugangsvorrichtungen vorgesehen sein können. Das Parksystem 100 kann insbesondere bei Parkvorrichtungen, wie Parkplätzen oder Parkhäusern, angewendet werden.

Die Zugangsvorrichtung 104 ist vorliegend als Schranke 104 mit einem an einer Säule 120 angeschlagenen Schrankenbaum 122 gebildet. Es versteht sich, dass andere Formen von Zugangsvorrichtungen eingesetzt werden können. Die Zugangsvorrichtung 104 ist eingerichtet, die Durchfahrt zu steuern von einem ersten Bereich 106, insbesondere einem Zufahrtsabschnitt 107 (der in Fahrtrichtung eines Fahrzeugs vor der Zugangsvorrichtung angeordnet ist) des ersten Bereichs 106, in einen weiteren Bereich 108. Wenn die Zugangsvorrichtung 104 eine Parkhaus-Einfahrt ist, stellt der erste Bereich 106 insbesondere den nicht kontrollierten Bereich dar und der weitere Bereich 108 den kontrollierten Bereich, insbesondere den Parkbereich. Wenn die Zugangsvorrichtung 104 eine Parkhaus-Ausfahrt ist, verhält es sich umgekehrt.

Zum Freigeben der Durchfahrt durch die Zugangsvorrichtung 102 ist ein ansteuerbarer Aktor 130 (z.B. ein Elektromotor) vorgesehen. Der Aktor 130 ist insbesondere eingerichtet zum Verfahren des Schrankenbaums 122 abhängig von einem Ansteuersignal.

Das Parksystem 100 umfasst vorliegend eine erste lokale Sendevorrichtung 110 und eine zweite lokale Sendevorrichtung 114. Die erste lokale Sendevorrichtung 110 ist eindeutig der Zugangsvorrichtung 104 zugeordnet. Ebenso ist die zweite lokale Sendevorrichtung 114 eindeutig der Zugangsvorrichtung 104 zugeordnet. Die erste lokale Sendevorrichtung 110 sendet ein erstes Sendefeld 112 aus, und die zweite lokale Sendevorrichtung 114 sendet ein zweites Sendefeld 116 aus. Vorzugsweise kann jede Nahfeld-Sendevorrichtung 110, 114 gebildet sein von einem Bluetooth-Beacon, insbesondere von einem BLE Beacon. Das erste Sendefeld 112 überträgt mindestens einen ersten Zugangsdatensatz und das zweite Sendefeld 116 mindestens einen zweiten Zugangsdatensatz. Es versteht sich, dass weitere Datensätze durch die Sendefelder 112, 116 übertragen werden können.

Die (eindeutige) Zuordnung der ersten Sendevorrichtung 110 und der zweiten Sendevorrichtung 114 zu der Zugangsvorrichtung 104 wird insbesondere durch den ersten Zugangsdatensatz und den zweiten Zugangsdatensatz abgebildet. Beispielsweise kann der erste Zugangsdatensatz eine eindeutige Kennung umfassen, aus der sich die Zuordnung zu der Zugangsvorrichtung 104 ergibt. Entsprechendes kann für den zweiten Zugangsdatensatz gelten. Alternativ oder zusätzlich kann zwischen den beiden Zugangsdatensätzen eine funktionale Beziehung bestehen. Aus dem Ergebnis einer funktionalen Prüfung der beiden Zugangsdatensätze kann dann eindeutig auf die zugeordnete Zugangsvorrichtung 104 geschlossen werden, diese also bestimmt werden.

Die lokale Sendevorrichtungen 110, 114 können insbesondere derart positioniert sein, dass der Zufahrtsabschnitt 107 zumindest teilweise von den jeweiligen Sendefeldern 112, 116 abgedeckt ist. Der Zufahrtsabschnitt 107 kann in einer Einlassrichtung vor einer Zufahrtsvorrichtung angeordnet sein und vorgebbare Dimensionen aufweisen. Insbesondere kann Zufahrtsabschnitt 107 so dimensioniert sein, dass ein Fahrzeug 118 ihn passieren kann. Hierbei können die Sendevorrichtungen 110, 114 so eingestellt sein, dass das den Zufahrtsabschnitt 107 passierende Fahrzeug 118 zumindest in einem Abschnitt vollständig von den entsprechenden Sendefeldern 112, 116 abgedeckt ist. Hierdurch kann sichergestellt werden, dass ein in dem Fahrzeug 118 vorhandenes mobiles Endgerät 132 mit einer Zugangsanwendung 134 (z.B. eine so genannte App) das erste Sendefeld 112 und das zweite Sendefeld 116 beim Passieren des Zufahrtsabschnitts 107 empfangen kann.

Wie aus der Figur 1 zu erkennen ist, sind im vorliegenden bevorzugten Beispiel die erste Sendevorrichtung 110 an einem ersten Seitenrand 109 des Zufahrtsabschnitt 107 der Zugangsvorrichtung 104 und die zweite Sendevorrichtung 114 an einem zweiten, dem ersten Seitenrand 109 gegenüberliegenden Seitenrand 111 des Zufahrtsabschnitts 107 der Zugangsvorrichtung 104 angeordnet.

Ferner ist vorliegend eine in der Säule 120 der Zugangsvorrichtung 104 integrierte Steuervorrichtung 124 mit mindestens einem Empfangsmodul 126 und mindestens einem Steuermodul 128 angeordnet.

Im Betrieb ist die Funktionsweise des dargestellten Parksystems 100 wie folgt:
Die erste lokale Sendevorrichtung 110 und die zweite lokale Sendevorrichtung 114 senden jeweils nahezu kontinuierlich das erste bzw. zweite Sendefeld 112, 116 aus. Aufgrund der gewählten Positionierung der lokalen Sendevorrichtungen 110, 114 muss ein sich der Zugangsvorrichtung 104 über den Zufahrtsabschnitt 107 näherndes Fahrzeug 118 die beiden Sendefelder 112, 116 passieren, derart dass diese Sendefelder 112, 116 von dem in dem Fahrzeug 118 angeordneten mobilen Endgerät 132 empfangen werden.

Die auf dem mobilen Endgerät 132 installierte Zugangsanwendung 134 weist insbesondere ein Verarbeitungsmittel auf, um eine Zugangsnachricht zu generieren und eine Aussendung der Zugangsnachricht über einen drahtlosen Kommunikationskanal 136 (z.B. ein weiteres lokales Sendefeld oder ein Fernfeld, wie ein Mobilfunknetz) zu bewirken. Die Zugangsnachricht kann mindestens umfassen einen zu dem ersten empfangenen Zugangsdatensatz und dem zweiten empfangenen Zugangsdatensatz korrespondierenden dritten Zugangsdatensatz (z.B. ein Auswertedatensatz umfassend eine Information über die bestimmte Zugangsvorrichtung und/oder den ersten und zweiten Zugangsdatensatz selbst). Zusätzlich kann die Zugangsnachricht eine insbesondere eindeutig dem mobilen Endgerät 132 und/oder dem Nutzer des mobilen Endgeräts 132 zugeordnete Kennung umfassen. Eine detailliertere beispielhafte Beschreibung erfolgt nachfolgend.

Die Zugangsnachricht kann von dem Empfangsmodul 126 empfangen und beispielsweise von der Steuervorrichtung 124 ausgewertet werden. Das Steuermodul 128 ist insbesondere zum Ansteuern der bestimmten Zugangsvorrichtung 104 abhängig von dem Auswerteergebnis eingerichtet. Vorzugsweise wird ein geeignetes Ansteuersignal an den Aktor 130 übertragen. Zusätzlich kann die Ansteuerung vorzugsweise von einer Auswertung der oben genannten Kennung abhängen. Die Ansteuerung kann insbesondere ein Öffnen (oder Schließen) der Zugangsvorrichtung 104 bewirken. In zuverlässiger und gleichzeitig nutzerfreundlicher Weise kann das Parksystem 100 betrieben werden.

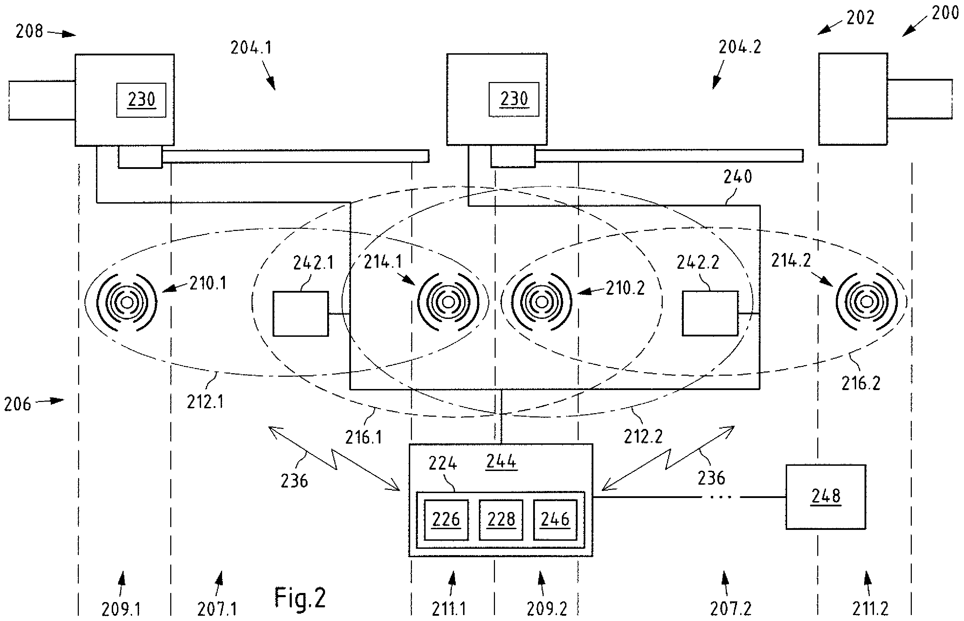

Figur 2 zeigt ein weiteres Beispiel eines Parksystems 200 gemäß der vorliegenden Anmeldung. Zur Vermeidung von Wiederholungen werden nachfolgend im Wesentlichen nur die Unterschiede zu dem Beispiel nach Figur 1 beschrieben. Für die anderen Komponenten des Parksystems 200 wird auf die obigen Ausführungen verwiesen. Zudem wurde zu Gunsten einer besseren Übersichtlichkeit auf die Darstellung von Fahrzeugen und mobilen Endgeräten verzichtet.

Das dargestellte Parksystem 200 umfasst eine Zugangsanordnung 202 mit mindestens zwei benachbart zueinander angeordneten Zugangsvorrichtungen 204.1, 204.2. Es versteht sich, dass zwei oder mehr Zugangsanordnungen vorgesehen sein können.

Jeder Zugangsvorrichtung 204.1, 204.2 ist in oben beschriebener Weise jeweils eine erste Sendevorrichtung 210.1, 210.2 und eine zweite Sendevorrichtung 214.1, 214.2 (eindeutig) zugeordnet.

Darüber hinaus ist im vorliegenden Beispiel zusätzlich jeder Zugangsvorrichtung 204.1, 204.2 eine Fahrzeugdetektionsvorrichtung 242.1, 242.2 zugeordnet. Insbesondere sind vorliegend Induktionsschleifen 242.1, 242.2 vorgesehen.

Das Parksystem 200 umfasst vorliegend zudem eine lokale Rechenvorrichtung 244 (z.B. ein Zellenrechner). Die lokale Rechenvorrichtung 244 kann insbesondere in der Parkvorrichtung, jedoch getrennt von der Zugangsvorrichtung 204, angeordnet sein. Die dargestellte lokale Rechenvorrichtung 244 umfasst eine Steuervorrichtung 224 mit einem Empfangsmodul 226, einem Steuermodul 228 und einer Auswerteeinrichtung 246. Die dargestellte Auswerteeinrichtung 246 ist eingerichtet zum Bestimmen der zugeordneten Zugangsvorrichtung, zumindest basierend auf dem empfangenen ersten Zugangsdatensatz und dem empfangenen zweiten Zugangsdatensatz, wie nachfolgend näher erläutert werden wird. Im vorliegenden Beispiel kann die Auswerteeinrichtung 246 (zudem) das Auswertemodul 246 bilden, welches zum Bestimmen der Präsenz eines Fahrzeugs im Bereich Fahrzeugdetektionsvorrichtung 242.1, 242.2 eingerichtet ist. Insbesondere kann bestimmt werden, ob bei der bestimmten Zugangsvorrichtung (insbesondere zum gleichen Zeitpunkt) ein Fahrzeug durch die entsprechende Fahrzeugdetektionsvorrichtung 242.1, 242.2 detektiert wird.

Die lokale Rechenvorrichtung 246 kann insbesondere mit einer entfernt angeordneten zentralen Rechenvorrichtung 248 (z.B. ein oder mehrere Server eines so genannten BackOffice) verbunden sein. Die zentrale Rechenvorrichtung 248 kann beispielsweise Parkvorgänge abrechnen und/oder die Autorisierung von Nutzern vor oder nach der Einfahrt (und/oder Ausfahrt) prüfen. Insbesondere können in einer Datenbank der zentralen Rechenvorrichtung 248 Nutzerkonten mit Daten von Nutzern (Kennungen, Abrechnungsdaten (z.B. Kreditkartendaten oder andere Kontodaten) hinterlegt sein und für die Authentizitätsprüfung und/oder Abrechnung verwendet werden. Beispielsweise kann eine empfangene Kennung eines Nutzers/mobilen Endgerät anhand der gespeicherten Nutzerdaten verifiziert werden. Hierbei kann die zentrale Rechenvorrichtung 248 zum Verwalten von einer Mehrzahl von Parkvorrichtungen (z.B. mit jeweils lokalen Rechenvorrichtungen) eingerichtet sein.

Die dargestellte lokale Rechenvorrichtung 246 ist ferner über ein Netzwerk 240 mit den Fahrzeugdetektionsvorrichtungen 242.1, 242.2 und den Aktoren 230 der Zugangsvorrichtungen 204.1, 204.2 verbunden. Über das Netzwerk 240 kann das Steuermodul 228 in oben beschriebener Weise eine in einem Auswerteschritt bestimmte Zugangsvorrichtung 204 zur Freigabe der Durchfahrt ansteuern.

Es versteht sich, dass bei anderen Varianten der Anmeldung die Funktion einer lokalen Rechenvorrichtung zumindest teilweise auch in der zentralen und entfernt angeordneten Rechenvorrichtung 248 integriert sein kann.

Vorzugsweise jede Sendevorrichtung 210, 214 kann eine Richtantenne aufweisen. Darüber hinaus kann optional eine (elektromagnetische) Abschirmung zwischen den aneinander angrenzenden Seitenrändern 211.1, 209.2 zweier benachbart angeordneter Zugangsvorrichtungen 204.1, 204.2 angeordnet sein.

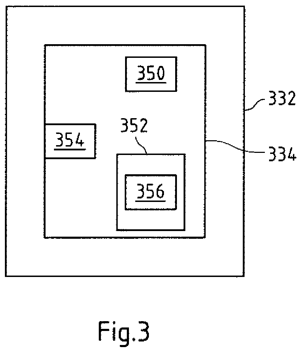

Die Figur 3 zeigt eine schematische Ansicht eines Beispiels eines mobilen Endgeräts 332 gemäß der vorliegenden Anmeldung. Das mobile Endgerät 332 zeichnet sich insbesondere aus durch eine anmeldungsgemäße Zugangsanwendung 334, insbesondere ein auf dem mobilen Endgerät 332 installiertes Computerprogramm.

Die Zugangsanwendung 334 umfasst ein Empfangsmittel 350, eingerichtet zum Erhalten von empfangenen (oben beschriebenen) Zugangsdatensätzen. Diese werden von einem Verarbeitungsmittel 352 verarbeitet. Optional kann die Zugangsanwendung 334, insbesondere das Verarbeitungsmittel 352, eine oben beschriebene Auswerteeinrichtung 354 umfassen.

Das Verarbeitungsmittel 352 ist insbesondere eingerichtet, eine Zugangsnachricht basierend auf den Zugangsdatensätzen zu generieren, insbesondere basierend auf einem Auswerteergebnis. Insbesondere kann eine Zugangsnachricht mit einem dritten Zugangsdatensatz generiert werden, z.B. einem Auswertedatensatz umfassend eine Information über die bestimmte Zugangsvorrichtung und/oder den ersten und zweiten Zugangsdatensatz selbst. Hierbei kann es passieren, dass bei Empfang eines weiteren Sendefelds (z.B. von einer weiteren lokalen Sendevorrichtung einer benachbarten Zugangsvorrichtung) die Zugangsnachricht einen weiteren ersten (oder zweiten) Zugangsdatensatz umfassen kann. Dies ist beispielsweise in Figur 2 angedeutet (vgl. insbesondere Sendefelder 212.2, 216.1, die jeweils bis in den benachbarten Zufahrtsabschnitt 207.1 und 207.2 hineinreichen).

Darüber hinaus kann die Zugangsnachricht eine (eindeutige) Kennung des mobilen Endgeräts 332 und/oder des Nutzers des mobilen Endgeräts 332 umfassen. Beispielhafte und nicht abschließende Kennungen sind Nutzernamen, Rufnummer des mobilen Endgeräts 332, eine IMEI (International Mobile Station Equipment Identity)-Nummer des mobilen Endgeräts 332, eine MAC (Media-Access-Control)-Adresse des mobilen Endgeräts 332, eine Kreditkartennummer, und/oder eine SIM (Subscriber Identity Module).

Ferner umfasst die Zugangsanwendung 334 ein Detektionsmittel 354, eingerichtet zum Detektieren des (augenblicklichen) Kopplungszustands des mobilen Endgeräts 332 mit einer Kopplungsvorrichtung des Fahrzeugs. Die Kopplungsvorrichtung kann beispielsweise eine Freisprechvorrichtung des Fahrzeugs oder eine ähnliche Vorrichtung sein. Auch kann es sich bei der Kopplungsvorrichtung um ein Parkelement (z.B. OBD2-Dongle) handeln. Bei derartigen Kopplungsvorrichtungen kann ein einmaliges Verbinden (Pairing) erforderlich sein. Anschließend erfolgt die Kopplung zwischen den Geräten (bei aktivierten Schnittstellen, z.B. Bluetooth) automatisch. Eine entsprechende Kopplung kann von dem Detektionsmittel 354 erfasst werden. Basierend auf dem detektierten Kopplungszustand kann das Verarbeitungsmittel 352 eine Zustandsnachricht mit einem entsprechenden Zustandsdatensatz generieren.

Nach der Generierung der Zustandsnachricht kann das Verarbeitungsmittel 352 eine Aussendung der Zustandsnachricht durch das mobile Endgerät 332 bewirken.

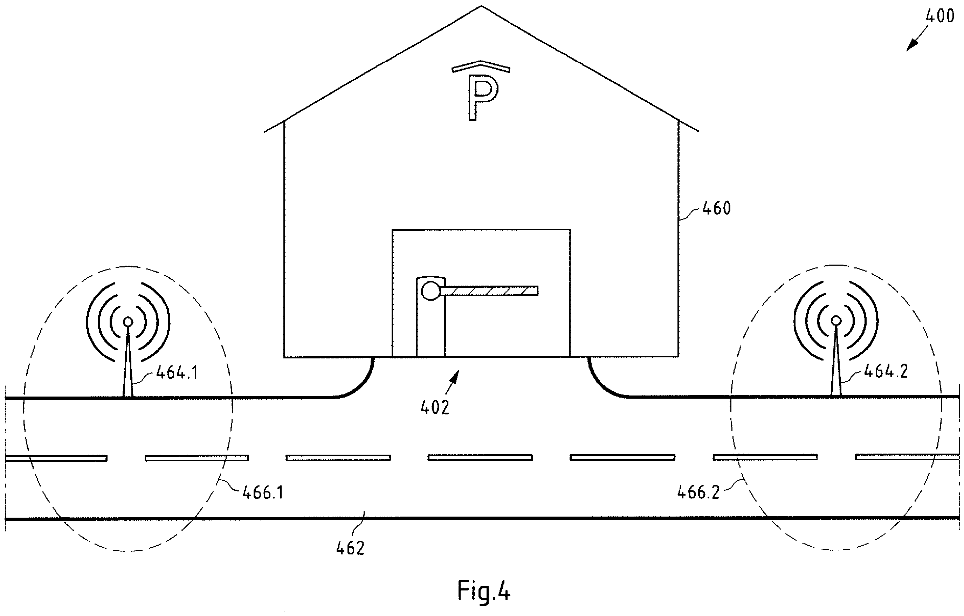

Die Figur 4 zeigt eine schematische Ansicht eines weiteren Beispiels eines Parksystems 400. Zur Vermeidung von Wiederholungen werden nachfolgend im Wesentlichen nur die Unterschiede zu dem Beispiel nach Figur 1 und 2 beschrieben. Für die anderen Komponenten des Parksystems 400 wird auf die obigen Ausführungen verwiesen. Zudem wurde zu Gunsten einer besseren Übersichtlichkeit auf die Darstellung von Fahrzeugen, mobilen Endgeräten, Zugangsvorrichtungen, ersten und zweiten Nahfeld-lokalen Sendevorrichtung/en, etc. verzichtet.

Das Parksystem 400 umfasst eine Parkvorrichtung 460 in Form eines Parkhauses 460. Angedeutet ist die Anordnung einer Zugangsanordnung 402 (z.B. in Form der Zugangsanordnung 202) an einer Zufahrt der Parkvorrichtung 460. Die Zufahrt kann über eine Straße 462 erreicht werden.

Wie ferner zu erkennen ist, umfasst das dargestellte Parksystem 400 eine Mehrzahl von dritten Sendevorrichtungen 464.1, 464.3, die in einer vorgebbaren Entfernung von der Zugangsanordnung 402 angeordnet sind. Vorzugsweise ist jede der dritten Sendevorrichtungen 464.1, 464.3 der Zugangsanordnung 402 (eindeutig) zugeordnet.

Eine dritte Sendevorrichtung 464.1, 464.3, insbesondere eine lokale Sendevorrichtung 464.1, 464.3, ist eingerichtet, ein drittes Sendefeld 466.1, 466.2 auszusenden. Die dritten Sendevorrichtungen 464.1, 464.3 können insbesondere derart positioniert sein, dass ein Fahrzeug, welches in der Parkvorrichtung 460 parken wird, (in jedem Fall) ein drittes Sendefeld 466.1, 466.2 zuvor passieren muss.

Das dritte Sendefeld 466.1, 466.2 umfasst einen Aktivierungsdatensatz zur Aktivierung einer auf einem mobilen Endgerät installierten Zugangsanwendung (z.B. Zugangsanwendung 334). Der Aktivierungsdatensatz kann insbesondere eine UUID (z.B. gemäß dem iBeacon-Standard) und sogenannte Major- und Minor-Daten (z.B. gemäß dem iBeacon-Standard) umfassen. Die UUID-Daten können so gewählt sein, dass ein mobiles Endgerät das dritte Sendefeld 466.1, 466.2 als von einem iBeacon stammend erkennt. Die Major- und Minor-Daten können verwendet werden, eine Empfangsinformation in Form einer ServiceUUID der ersten lokalen Sendevorrichtung und zweiten lokalen Sendevorrichtung darzustellen. Nach Empfang des Aktivierungsdatensatzes kann insbesondere die Zugangsanwendung auf dem mobilen Endgerät gestartet und insbesondere konfiguriert werden. Nach Empfang des Aktivierungsdatensatzes weiß insbesondere die Zugangsanwendung, nach welchen ServiceUUIDs sie scannen muss, um erste und zweite Sendefelder zu empfangen und zu verarbeiten. Aufgrund einer Zuordnung zu der Zugangsanordnung 402 kann das dritte Sendefeld 466.1, 466.2 auf die ersten Sendefelder und zweiten Sendefelder entsprechend abgestimmt sein.

Es versteht sich, dass innerhalb der Parkvorrichtung 460 entsprechende dritte Sendevorrichtungen vor den Ausfahrten der Parkvorrichtung 460 vorgesehen sein können.

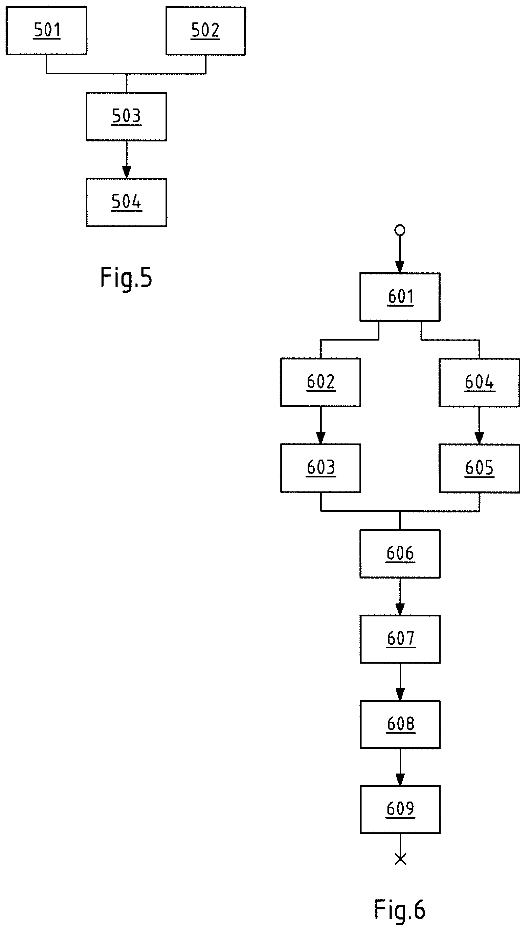

Der Betrieb und die Funktionsweise der oben beschriebenen beispielhaften Parksysteme werden nachfolgend mit Hilfe der Figur 5 näher beschrieben.

In einem ersten Schritt 501 wird mindestens ein erstes Sendefeld von einer ersten lokalen Sendevorrichtung (zumindest nahezu kontinuierlich) ausgesendet. In Schritt 502 wird mindestens ein zweites Sendefeld von einer zweiten lokalen Sendevorrichtung (zumindest nahezu kontinuierlich) ausgesendet. Die Schritte 501 und 502 können vorzugsweise parallel durchgeführt werden. Beide lokalen Sendevorrichtungen sind dergleichen Zugangsvorrichtung zugeordnet.

In einem Auswerteschritt 503 kann die zugeordnete Zugangsvorrichtung bestimmt werden, zumindest basierend auf dem ersten (von einem mobilen Endgerät) empfangenen Zugangsdatensatz und dem zweiten (von dem mobilen Endgerät) empfangenen Zugangsdatensatz. Insbesondere kann hierdurch bestimmt werden, vor welcher Zugangsvorrichtung sich das Fahrzeug, umfassend das mobile Endgerät, befindet. Der Auswerteschritt wird nachfolgend näher beschrieben.

In Schritt 504 kann eine Durchfahrt durch die bestimmte Zugangsvorrichtung durch Ansteuern der entsprechenden Zugangsvorrichtung freigegeben werden, zumindest basierend auf dem Auswerteergebnis des Auswerteschritts.

Die Figur 6 zeigt ein weiteres Diagramm eines Ausführungsbeispiels eines Verfahrens gemäß der vorliegenden Anmeldung. Insbesondere beschreibt das dargestellte Verfahren die Bestimmung der Zugangsvorrichtung näher.

Nähert sich ein Fahrzeug mit einem mobilen Endgerät einer anmeldungsgemäßen Zugangsanordnung, empfängt das mobile Endgerät in Schritt 601 mindestens zwei (unterschiedliche) Zugangsdatensätze. Das mobile Endgerät kann vorzugsweise entsprechend dem Beispiel in Figur 3 gebildet sein. In diesem Fall können sämtliche empfangenen ersten und zweiten Zugangsdatensätze von dem Empfangsmittel der Zugangsanwendung erhalten werden. Vorzugsweise kann die Zugangsanwendung zuvor durch ein drittes Sendefeld aktiviert bzw. aufgeweckt worden sein (vgl. Fig. 4).

Abhängig von der Ausbildung des Parksystems, insbesondere der Zugangsanwendung und/oder der Steuervorrichtung, kann das Verfahren in einer Ausführungsform gemäß den Schritten 602 und 603 oder mit den Schritten 604 und 605 fortgesetzt werden.

In Schritt 602 kann das Verarbeitungsmodul insbesondere die Generierung einer Zugangsnachricht und deren Aussendung durch das mobile Endgerät bewirken. In diesem Fall kann die Zugangsnachricht als dritten Zugangsdatensatz sämtliche zuvor empfangenen ersten und zweiten Zugangsdatensätze umfassen. Mit anderen Worten können die empfangenen ersten und zweiten Zugangsdatensätze von dem mobilen Endgerät in Form einer Zugangsnachricht beispielsweise an eine Steuervorrichtung übertragen werden. Vorzugsweise kann die Zugangsnachricht zusätzlich mindestens eine (eindeutige) Kennung des mobilen Endgeräts und/oder des Nutzers des mobilen Endgeräts und insbesondere einen Zustandsdatensatz über einen Kopplungszustand des mobilen Endgeräts umfassen.

Es versteht sich, dass eine Zugangsnachricht abhängig von der Größe der zu übertragenen Datenmenge auch aus mehreren Teil-Zugangsnachrichten bestehen kann. Es versteht sich ferner, dass eine Zugangsnachricht weitere Daten umfassen kann, wie z.B. einen Zeitstempel, eine Prüfsumme und dgl.

Nach der Übertragung über einen drahtlosen Kommunikationskanal kann insbesondere eine Steuervorrichtung die Zugangsnachricht empfangen und mittels einer Auswerteeinrichtung auswerten (Schritt 603). Insbesondere kann in diesem Auswerteschritt bestimmt werden, vor welcher Zugangsvorrichtung das Fahrzeug umfassend das mobile Endgerät positioniert ist. Hierfür kann die Auswerteeinrichtung die ersten und zweiten Zugangsdatensätze auswerten. Insbesondere kann geprüft werden, von welchen ersten und zweiten lokalen Sendevorrichtungen die empfangenen Zugangsdatensätze ausgesendet wurden und insbesondere welcher Zugangsvorrichtung diese lokalen Sendevorrichtungen zugeordnet sind.

Bevorzugt weist ein erster Zugangsdatensatz eine funktionale Beziehung zu einem zweiten Zugangsdatensatz (siehe z.B. Formel a) auf, wenn die entsprechenden lokalen Sendevorrichtungen der gleichen Zugangsvorrichtung zugeordnet sind. Über die Funktion können die lokalen Sendevorrichtungen miteinander und mit der Zugangsordnung in eindeutiger Weise verknüpft sein. In diesem Fall kann insbesondere folgende Auswertung erfolgen:

$$\text{Ergebnis} = f\left(D_1, D_2\right) \qquad\qquad (b)$$

Das Auswerteergebnis kann dann insbesondere in eindeutiger Weise die korrekte Zugangsvorrichtung angeben.

Hierbei kann es vorkommen, dass von dem mobilen Endgerät neben den (korrekten) Zugangsdatensätzen $D_1$, $D_2$ ein weiterer (falscher) erster (oder zweiter) Zugangsdatensatz einer benachbarten Zugangsvorrichtung empfangen wurde. Da jedoch die ersten und zweiten lokalen Sendevorrichtungen von benachbarten Zugangsvorrichtungen insbesondere derart angeordnet sind, dass maximal ein Sendefeld in einen Zufahrtsabschnitt der anderen Zugangsvorrichtung hineinreichen kann, fehlt es insbesondere an dem weiteren zweiten (oder ersten) Zugangsdatensatz von der benachbarten Zugangsvorrichtung. Aus diesem Fehlen bzw. aufgrund der Tatsache, dass keine funktionale Beziehung von einem empfangenen Zugangsdatensatz zu einem weiteren Zugangsdatensatz bestimmt werden kann, kann in zuverlässiger Weise die korrekte Zugangsvorrichtung bestimmt werden.

Alternativ kann in den Schritten 604 und 605 wie folgt vorgegangen werden: Zunächst kann der Auswerteschritt (siehe Schritt 603) in Schritt 604 durch eine Auswerteeinrichtung des Endgeräts durchgeführt werden. Mit anderen Worten kann die Auswertung durch das die Zugangsdatensätze empfangene mobile Endgerät durchgeführt werden. Anschließend kann in Schritt 605 von dem Verarbeitungsmittel des Endgeräts eine Zugangsnachricht mit einem dritten Zugangsdatensatz generiert werden. In diesem Fall kann der dritte Zugangsdatensatz das Auswerteergebnis (vgl. Formel b) umfassen. Wie oben beschrieben wurde, kann die Zugangsnachricht weitere Datensätze umfassen. Das Verarbeitungsmittel kann die Aussendung der Zugangsnachricht durch das mobile Endgerät bewirken.

Es kann vorkommen, dass sich in einem Fahrzeug mehr als ein mobiles Endgerät befindet. Dies kann dazu führen, dass zwei oder mehr Zugangsnachrichten in Schritt 602 bzw. 605 generiert, ausgesendet und von einer Steuervorrichtung empfangen werden.

Nach dem Empfang von Zugangsnachrichten kann in dem Schritt 606 von der Steuervorrichtung mindestens ein Zustandsdatensatz der Zugangsnachrichten geprüft werden. Beispielsweise können zwei Zugangsnachrichten mit Kennungen von unterschiedlichen mobilen Endgeräten empfangen werden. Die Auswertungen (vgl. Schritt 603 oder 604) können als Ergebnis dieselbe Zugangsvorrichtung haben. Insbesondere für eine nachfolgende Abrechnung des Parkvorgangs, kann von den mindestens zwei möglichen mobilen Endgeräten in Schritt 606 ein mobiles Endgerät abhängig von den jeweiligen Kopplungszuständen bestimmt werden. Wenn beispielsweise aus einer der zwei Zugangsnachrichten hervorgeht, dass ein mobiles Endgerät derzeit mit einer Kopplungsvorrichtung des Fahrzeugs gekoppelt ist, wird dieses Endgerät bestimmt und die zugehörige Zugangsnachricht mit der Kennung von diesem Endgerät weiterverarbeitet (wie nachfolgend beschrieben wird). Die andere Zugangsnachricht kann beispielsweise ignoriert und/oder gelöscht werden.

Es versteht sich, dass die Schritte 603 und 606 zumindest teilweise parallel und/oder von der gleichen Auswerteeinrichtung durchgeführt werden kann/können.

Ferner kann es passieren, dass sich ein mobiles Endgerät innerhalb der Sendereichweite eines ersten und eines zweiten Sendefelds befinden kann, ohne dass sich das mobile Endgerät in einem Fahrzeug befindet. Beispielsweise kann ein Nutzer mit einem entsprechenden mobilen Endgerät durch die entsprechenden Sendefelder laufen. Um in diesem Fall beispielsweise ein ungewolltes Freigeben einer Zugangsvorrichtung zu vermeiden, kann in Schritt 607 die tatsächliche Präsenz eines Fahrzeugs in dem Zufahrtsabschnitt vor der bestimmten Zugangsvorrichtung bestimmt werden. Hierzu kann in Schritt 607 ein Detektionssignal der Fahrzeugdetektionsvorrichtung ausgewertet werden. Ergibt diese Auswertung, dass kein Fahrzeug an der bestimmten Zugangsvorrichtung präsent ist, kann das Verfahren abgebrochen werden. Bei der Detektion eines Fahrzeugs an der bestimmten Zugangsvorrichtung kann das Verfahren mit dem optionalen Schritt 608 fortgesetzt werden.

Es versteht sich, dass die Auswertung in einem einfachen Fall lediglich das Vorhandensein oder Nicht-Vorhandensein eines Detektionssignals umfassen kann.

Vor der Freigabe einer Durchfahrt durch die Zugangsvorrichtung kann insbesondere vorgesehen sein, eine empfangene Kennung des mobilen Endgeräts und/oder des Nutzers des mobilen Endgeräts (lokal) zu überprüfen (Schritt 608). Beispielsweise kann in einer lokalen Rechenvorrichtung eine Negativ-Liste mit nicht autorisierten Kennungen gespeichert sein. In einem Vergleichsschritt kann die empfangene Kennung mit den gespeicherten Kennungen verglichen werden. Wenn die Kennung zu einer gespeicherten Kennung korrespondiert, dann kann das Verfahren abgebrochen werden. Die Zugangsvorrichtung bleibt gesperrt (oder wird gesperrt). Wenn die Kennung zu keiner gespeicherten Kennung korrespondiert, kann das Verfahren mit Schritt 609 fortgesetzt werden.

Es versteht sich, dass dieser Schritt auch vorher, beispielsweise vor Schritt 606 durchgeführt werden kann. Es versteht sich weiter, dass dieser Schritt auch mit einer Positiv-Liste durchgeführt werden kann: Wenn die Kennung zu einer in der Positiv-Liste gespeicherten Kennung korrespondiert, wird das Verfahren fortsetzt, sonst wird es abgebrochen.

Alternativ oder zusätzlich kann auch eine Überprüfung durch die entfernt angeordnete zentrale Rechenvorrichtung erfolgen. Die Rechenvorrichtung kann zumindest die Kennung des mobilen Endgeräts und/oder des Nutzers des mobilen Endgeräts mit gespeicherten Nutzerdaten vergleichen. Insbesondere kann ein Vergleich durchgeführt werden mit den für das Parksystem gültigen Kennungen, die in der zentralen Rechenvorrichtung, beispielsweise aufgrund von vorherigen Registrierungsschritten, gespeichert sein können. Beispielsweise kann vor oder während der Installierung der Zugangsanwendung oder bei der erstmaligen Nutzung der Zugangsanwendung eine Registrierung des Nutzers/mobilen Endgeräts bei der zentralen Rechenvorrichtung erforderlich sein. Während der Registrierung kann eine eindeutige Kennung festgelegt und sowohl in einer Speichereinrichtung des mobilen Endgeräts (sofern noch nicht vorhanden) als auch in einer Speichereinrichtung der zentralen Rechenvorrichtung gespeichert werden. Zusätzlich können Abrechnungsdaten in dem Registrierungsschritt gespeichert werden.

Zusätzlich kann, insbesondere nach einer Ausfahrt aus einer Parkvorrichtung, noch ein optionaler Abrechnungsschritt folgen. Auch kann dieser Abrechnungsschritt vor der Ausfahrt erfolgen. Hierbei kann beispielsweise vor der Ausfahrt, insbesondere vor einer Freigabe, geprüft werden, ob eine Bezahlung tatsächlich erfolgt ist.

Es versteht sich, dass die oben beschriebenen Kommunikationsvorgänge verschlüsselt erfolgen können. Zudem versteht es sich, dass die Schritte in unterschiedlicher Reihenfolge ausgeführt werden können. Beispielsweise kann zunächst der Schritt 608 und dann der Schritt 607 erfolgen. Auch können die Schritte zumindest teilweise parallel durchgeführt werden.

Zur Durchführung der verschiedenen Schritte können die Vorrichtungen/Geräte über geeignete Mittel (Prozessoren, Speicher, Schnittstellen, etc.) verfügen.

**Patentansprüche**

1. Parksystem (100, 200, 400), umfassend:

   - mindestens eine Zugangsanordnung (102, 202, 402) mit mindestens einer Zugangsvorrichtung (104, 204.1, 204.2), eingerichtet zur Kontrolle einer Durchfahrt von einem ersten Bereich (106, 206) mit einem Zufahrtsabschnitt (107, 207.1, 207.2) in einen weiteren Bereich (108, 207),
   - mindestens eine erste, der Zugangsvorrichtung (104, 204.1, 204.2) zugeordnete Nahfeld-Sendevorrichtung (110, 210.1, 210.2), eingerichtet zum Aussenden eines ersten Sendefelds (112, 212.1, 212.2),
   - mindestens ein mobiles Endgerät (132, 332),
   - wobei das erste Sendefeld (112, 212.1, 212.2) mindestens einen ersten, von dem in dem Zufahrtsabschnitt (107, 207.1, 207.2) befindlichen mobilen Endgerät (132, 332) empfangbaren Zugangsdatensatz umfasst,

   wobei das Parksystem (100, 200, 400) umfasst:

   - mindestens eine zweite, der Zugangsvorrichtung (104, 204.1, 204.2) zugeordnete Nahfeld-Sendevorrichtung (114, 214.1, 214.2), eingerichtet zum Aussenden eines zweiten Sendefelds (116, 216.1, 216.2),
   - wobei das zweite Sendefeld (116, 216.1, 216.2) mindestens einen zweiten, von dem in dem Zufahrtsabschnitt (107, 207.1, 207.2) befindlichen mobilen Endgerät (132, 332) empfangbaren Zugangsdatensatz umfasst,
   - wobei sowohl das erste Sendefeld (112, 212.1, 212.2) als auch das zweite Sendefeld (116, 216.1, 216.2) den gesamten Zufahrtsabschnitt (107, 207.1, 207.2) im Wesentlichen abdeckt, wobei der erste Zugangsdatensatz eine Funktion des zweiten Zugangsdatensatzes ist, und
   - mindestens eine Auswerteeinrichtung (246, 354), eingerichtet zum Bestimmen der zugeordneten Zugangsvorrichtung (104, 204.1, 204.2), zumindest basierend auf einer Auswertung der funktionalen Beziehung des durch das mobile Endgerät empfangenen ersten Zugangsdatensatzes zu dem durch das mobile Endgerät empfangenen zweiten Zugangsdatensatz,
   - mindestens eine Steuervorrichtung (124, 224), eingerichtet zum Freigeben einer Durchfahrt durch eine bestimmte Zugangsvorrichtung (104, 204.1, 204.2) abhängig von dem Auswerteergebnis,
- wobei die Steuervorrichtung (124, 224) mindestens ein Empfangsmodul (126, 226) umfasst, eingerichtet zum Empfangen einer Zugangsnachricht von dem mobilen Endgerät (132, 332),
- wobei die Zugangsnachricht mindestens einen zu dem empfangenen ersten Zugangsdatensatz und dem empfangenen zweiten Zugangsdatensatz korrespondierenden dritten Zugangsdatensatz umfasst, wobei die Zugangsnachricht zumindest eine dem mobilen Endgerät und/oder dem Nutzer des mobilen Endgeräts zugeordnete Kennung umfasst,
- wobei die Zugangsnachricht mindestens einen Zustandsdatensatz des mobilen Endgeräts (132, 332) umfasst,
- wobei der Zustandsdatensatz mindestens einen Kopplungszustand des mobilen Endgeräts (132, 332) mit einer Kopplungsvorrichtung des Fahrzeugs (118) umfasst,
- wobei nach dem Empfang von Zugangsnachrichten durch die Steuervorrichtung mindestens ein Zustandsdatensatz der Zugangsnachrichten geprüft wird, wobei wenn zwei Zugangsnachrichten mit Kennungen von unterschiedlichen mobilen Endgeräten empfangen werden und die Auswertungen der zwei Zugangsnachrichten als Ergebnis dieselbe Zugangsvorrichtung haben, von den mindestens zwei möglichen mobilen Endgeräten ein mobiles Endgerät abhängig von den jeweiligen Kopplungszuständen bestimmt wird, wobei wenn aus einer der zwei Zugangsnachrichten hervorgeht, dass ein mobiles Endgerät derzeit mit einer Kopplungsvorrichtung des Fahrzeugs gekoppelt ist, dieses mobile Endgerät bestimmt wird und die zugehörige Zugangsnachricht mit der Kennung von diesem mobilen Endgerät weiterverarbeitet wird.

2. Parksystem (100, 200, 400) nach Anspruch 1, **dadurch gekennzeichnet, dass**

   - die erste Nahfeld-Sendevorrichtung (110, 210.1, 210.2) an einem ersten Seitenrand (109, 209.1, 209.2) des Zufahrtsabschnitts (107, 207.1, 207.2) der Zugangsvorrichtung (104, 204.1, 204.2) angeordnet ist, und
   - die zweite Nahfeld-Sendevorrichtung (114, 214.1, 214.2) an einem zweiten, dem ersten Seitenrand (109, 209.1, 209.2) gegenüberliegenden Seitenrand (111, 211.1, 211.2) des Zufahrtsabschnitts (107, 207.1, 207.2) der Zugangsvorrichtung (104, 204.1, 204.2) angeordnet ist.

3. Parksystem (100, 200, 400) nach Anspruch 1 oder 2, **dadurch gekennzeichnet, dass**

   - das Parksystem (100, 200, 400) mindestens eine Steuervorrichtung (124, 224), eingerichtet zum Freigeben einer Durchfahrt durch eine bestimmte Zugangsvorrichtung (104, 204.1, 204.2), umfasst,
   - wobei die Steuervorrichtung (124, 224) ein Steuermodul (128, 228), eingerichtet zum Ansteuern der bestimmten Zugangsvorrichtung (104, 204.1, 204.2) abhängig von dem Auswerteergebnis, umfasst.

4. Parksystem (100, 200, 400) nach einem der vorherigen Ansprüche, **dadurch gekennzeichnet, dass**

   - das Parksystem (100, 200, 400) mindestens eine der Zugangsvorrichtung (104, 204.1, 204.2) zugeordnete Fahrzeugdetektionsvorrichtung (242.1, 242.2) umfasst,
   - wobei die Fahrzeugdetektionsvorrichtung (242.1, 242.2) zum Detektieren eines Fahrzeugs (118) vor der Zugangsvorrichtung (104, 204.1, 204.2) eingerichtet ist, und
   - wobei die Steuervorrichtung (124, 224) mindestens ein Auswertemodul, eingerichtet zum Bestimmen, ob bei der bestimmten Zugangsvorrichtung (104, 204.1, 204.2) ein Fahrzeug (118) detektiert wird, umfasst.

5. Parksystem (100, 200, 400) nach einem der vorherigen Ansprüche, **dadurch gekennzeichnet, dass**

   - das Parksystem (100, 200, 400) mindestens eine dritte, der Zugangsanordnung (102, 202, 402) zugeordnete Sendevorrichtung (464.1, 464.2) umfasst,
   - wobei die dritte Sendevorrichtung (464.1, 464.2) zum Aussenden eines dritten Sendefelds (466.1, 466.2), umfassend einen Aktivierungsdatensatz zur Aktivierung einer auf dem mobilen Endgerät (132, 332) installierten Zugangsanwendung (134, 334), eingerichtet ist.

6. Parksystem (100, 200, 400) nach einem der vorherigen Ansprüche, **dadurch gekennzeichnet, dass** die erste Nahfeld-Sendevorrichtung (110, 210.1, 210.2) und/oder die zweite Nahfeld-Sendevorrichtung (114, 214.1, 214.2) eine Richtantenne umfasst/en.

7. Parksystem (100, 200, 400) nach einem der vorherigen Ansprüche, **dadurch gekennzeichnet, dass**

   - die Zugangsanordnung (102, 202, 402) mindestens zwei benachbart zueinander angeordnete Zugangsvorrichtungen (104, 204.1, 204.2) umfasst,
- wobei jeder der benachbart zueinander angeordneten Zugangsvorrichtungen (104, 204.1, 204.2) zumindest eine erste Nahfeld-Sendevorrichtung (110, 210.1, 210.2) und eine zweite Nahfeld-Sendevorrichtung (114, 214.1, 214.2) zugeordnet ist.

8. Verfahren zum Betreiben eines Parksystems (100, 200, 400), insbesondere einem Parksystem (100, 200, 400) nach einem der vorherigen Ansprüche, wobei das Parksystem (100, 200, 400) mindestens eine Zugangsanordnung (102, 202, 402) mit mindestens einer Zugangsvorrichtung (104, 204.1, 204.2) und mindestens ein mobiles Endgerät umfasst, das Verfahren umfassend:

- Aussenden eines ersten Sendefelds (112, 212.1, 212.2) mit mindestens einem ersten Zugangsdatensatz von einer ersten, der Zugangsvorrichtung (104, 204.1, 204.2) zugeordneten Nahfeld-Sendevorrichtung (110, 210.1, 210.2),
- Aussenden eines zweiten Sendefelds (116, 216.1, 216.2) mit mindestens einem zweiten Zugangsdatensatz von einer zweiten, der Zugangsvorrichtung (104, 204.1, 204.2) zugeordneten Nahfeld-Sendevorrichtung (114, 214.1, 214.2),
- wobei das erste Sendefeld (112, 212.1, 212.2) und das zweite Sendefeld (116, 216.1, 216.2) von dem mobilen Endgerät (132, 332) empfangbar sind,
- wobei sowohl das erste Sendefeld (112, 212.1, 212.2) als auch das zweite Sendefeld (116, 216.1, 216.2) den gesamten Zufahrtsabschnitt (107, 207.1, 207.2) im Wesentlichen abdeckt,
- wobei der erste Zugangsdatensatz eine Funktion des zweiten Zugangsdatensatzes ist,
- Bestimmen der zugeordneten Zugangsvorrichtung (104, 204.1, 204.2), zumindest basierend auf einer Auswertung der funktionalen Beziehung des durch das mobile Endgerät empfangenen ersten Zugangsdatensatzes zu dem durch das mobile Endgerät empfangenen zweiten Zugangsdatensatz in einem Auswerteschritt,
- Freigeben, durch eine Steuervorrichtung, einer Durchfahrt durch die bestimmte Zugangsvorrichtung (104, 204.1, 204.2) zumindest basierend auf dem Auswerteergebnis des Auswerteschritts,
- wobei die Steuervorrichtung (124, 224) durch ein Empfangsmodul (126, 226) der Steuervorrichtung (124, 224) eine Zugangsnachricht von dem mobilen Endgerät (132, 332) empfängt,
- wobei die Zugangsnachricht mindestens einen dritten Zugangsdatensatz umfasst, der zu dem empfangenen ersten Zugangsdatensatz und dem empfangenen zweiten Zugangsdatensatz korrespondiert, wobei die Zugangsnachricht zumindest eine dem mobilen Endgerät und/oder dem Nutzer des mobilen Endgeräts zugeordnete Kennung umfasst,
- wobei nach dem Empfang von Zugangsnachrichten durch die Steuervorrichtung mindestens ein Zustandsdatensatz der Zugangsnachrichten geprüft wird, wobei wenn zwei Zugangsnachrichten mit Kennungen von unterschiedlichen mobilen Endgeräten empfangen werden und die Auswertungen der zwei Zugangsnachrichten als Ergebnis dieselbe Zugangsvorrichtung haben, von den mindestens zwei möglichen mobilen Endgeräten ein mobiles Endgerät abhängig von den jeweiligen Kopplungszuständen bestimmt wird, wobei wenn aus einer der zwei Zugangsnachrichten hervorgeht, dass ein mobiles Endgerät derzeit mit einer Kopplungsvorrichtung des Fahrzeugs gekoppelt ist, dieses mobile Endgerät bestimmt wird und die zugehörige Zugangsnachricht mit der Kennung von diesem mobilen Endgerät weiterverarbeitet wird.

**Claims**

1. Parking system (100, 200, 400), comprising:

- at least one access arrangement (102, 202, 402) comprising at least one access device (104, 204.1, 204.2) configured to control a passage from a first area (106, 206) comprising an access section (107, 207.1, 207.2) to a further area (108, 207),
- at least one first near-field transmitting device (110, 210.1, 210.2), associated with the access device (104, 204.1, 204.2), configured to transmit a first transmitting field (112, 212.1, 212.2),
- at least one mobile terminal (132, 332),
- wherein the first transmitting field (112, 212.1, 212.2) comprises at least one first access data set receivable by the mobile terminal (132, 332) located in the access section (107, 207.1, 207.2),
- wherein the parking system (100, 200, 400) comprises:

- at least one second near-field transmitting device (114, 214.1, 214.2), associated with the access device (104, 204.1, 204.2), configured to transmit a second transmitting field (116, 216.1, 216.2),

- wherein the second transmitting field (116, 216.1, 216.2) comprises at least one second access data set receivable by the mobile terminal (132, 332) located in the access section (107, 207.1, 207.2),
- wherein both the first transmitting field (112, 212.1, 212.2) and the second transmitting field (116, 216.1, 216.2) cover substantially the entire access section (107, 207.1, 207.2),
- wherein the first access data set is a function of the second access data set, and
- at least one evaluation unit (246, 354) configured to determine the associated access device (104, 204.1, 204.2), at least based on an evaluation of the functional relationship of the first access data set received by the mobile terminal to the second access data set received by the mobile terminal,
- at least one control device (124, 224) configured to release a passage through a determined access device (104, 204.1, 204.2) depending on the evaluation result,
- wherein the control device (124, 224) comprises at least one receiving module (126, 226) configured to receive an access message from the mobile terminal (132, 332),
- wherein the access message comprises at least one third access data set corresponding to the received first access data set and the received second access data set, wherein the access message comprises at least one identifier associated with the mobile terminal and/or the user of the mobile terminal,
- wherein the access message comprises at least one state data set of the mobile terminal (132, 332),
- wherein the state data set comprises at least one coupling state of the mobile terminal (132, 332) with a coupling device of the vehicle (118),
- wherein after receipt of access messages by the control device at least one state data set of the access messages is checked, wherein if two access messages with identifiers of different mobile terminals are received and the evaluations of the two access messages have the same access device as a result, one mobile terminal is determined from the at least two possible mobile terminals as a function of the respective coupling states, wherein if one of the two access messages indicates that a mobile terminal is currently coupled to a coupling device of the vehicle, this mobile terminal is determined and the associated access message with the identifier of this mobile terminal is processed further.

2. Parking system (100, 200, 400) according to claim 1, **characterized in that**

   - the first near-field transmitting device (110, 210.1, 210.2) is arranged at a first side edge (109, 209.1, 209.2) of the access section (107, 207.1, 207.2) of the access device (104, 204.1, 204.2), and
   - the second near-field transmitting device (114, 214.1, 214.2) is arranged at a second side edge (111, 211.1, 211.2) of the access section (107, 207.1, 207.2) of the access device (104, 204.1, 204.2) opposite the first side edge (109, 209.1, 209.2).

3. Parking system (100, 200, 400) according to claim 1 or 2, **characterized in that**

   - the parking system (100, 200, 400) comprises at least one control device (124, 224) configured to release passage through a particular access device (104, 204.1, 204.2),
   - wherein the control device (124, 224) comprises a control module (128, 228) configured to control the determined access device (104, 204.1, 204.2) depending on the evaluation result.

4. Parking system (100, 200, 400) according to any one of the preceding claims, **characterized in that**

   - the parking system (100, 200, 400) comprises at least one vehicle detection device (242.1, 242.2) associated with the access device (104, 204.1, 204.2),
   - wherein the vehicle detection device (242.1, 242.2) is configured to detect a vehicle (118) in front of the access device (104, 204.1, 204.2), and
   - wherein the control device (124, 224) comprises at least one evaluation module configured to determine whether a vehicle (118) is detected at the determined access device (104, 204.1, 204.2).

5. Parking system (100, 200, 400) according to any one of the preceding claims, **characterized in that**

   - the parking system (100, 200, 400) comprises at least one third transmitting device (464.1, 464.2) associated with the access arrangement (102, 202, 402),
   - wherein the third transmitting device (464.1, 464.2) is configured to transmit a third transmitting field (466.1, 466.2) comprising an activation data set for activating an access application (134, 334) installed on the mobile terminal (132, 332).

6. Parking system (100, 200,400) according to any one of the preceding claims, **characterized in that** the first near-field transmitting device (110, 210.1, 210.2) and/or the second near-field transmitting device (114, 214.1, 214.2) comprise/s a directional antenna.

7. Parking system (100, 200,400) according to any one of the preceding claims, **characterized in that**

- the access arrangement (102, 202, 402) comprises at least two access devices (104, 204.1, 204.2) arranged adjacent to each other,
- wherein each of the access devices (104, 204.1, 204.2) arranged adjacent to each other is associated with at least one first near-field transmitting device (110, 210.1, 210.2) and one second near-field transmitting device (114, 214.1, 214.2).

8. A method for operating a parking system (100, 200,400), in particular a parking system (100, 200, 400) according to any one of the preceding claims, wherein the parking system (100, 200, 400) comprises at least one access arrangement (102, 202, 402) with at least one access device (104, 204.1, 204.2) and at least one mobile terminal, the method comprising:

- transmitting a first transmitting field (112, 212.1, 212.2) having at least one first access data set by a first near-field transmitting device (110, 210.1, 210.2) associated with the access device (104, 204.1, 204.2),
- transmitting a second transmitting field (116, 216.1, 216.2) having at least one second access data set by a second near-field transmitting device (114, 214.1, 214.2) associated with the access device (104, 204.1, 204.2),
- wherein the first transmitting field (112, 212.1, 212.2) and the second transmitting field (116, 216.1, 216.2) are receivable by the mobile terminal (132, 332),
- wherein both the first transmitting field (112, 212.1, 212.2) and the second transmitting field (116, 216.1, 216.2) cover substantially the entire access section (107, 207.1, 207.2),
- wherein the first access data set is a function of the second access data set,
- determining the associated access device (104, 204.1, 204.2) based at least on an evaluation of the functional relationship of the first access data set received by the mobile terminal to the second access data set received by the mobile terminal in an evaluation step,
- releasing, by a control device, a passage through the determined access device (104, 204.1, 204.2) at least based on the evaluation result of the evaluation step,
- wherein the control device (124, 224) receives an access message from the mobile terminal (132, 332) by a receiving module (126, 226) of the control device (124, 224),
- wherein the access message comprises at least one third access data set corresponding to the received first access data set and the received second access data set, wherein the access message comprises at least one identifier associated with the mobile terminal and/or the user of the mobile terminal,
- wherein after the receipt of access messages by the control device at least one state data set of the access messages is checked, wherein if two access messages with identifiers of different mobile terminals are received and the evaluations of the two access messages have the same access device as a result, one mobile terminal is determined from the at least two possible mobile terminals as a function of the respective coupling states, wherein if one of the two access messages indicates that a mobile terminal is currently coupled to a coupling device of the vehicle, this mobile terminal is determined and the associated access message with the identifier of this mobile terminal is processed further.

**Revendications**

1. Système de stationnement (100, 200, 400) comprenant :

- au moins un agencement d'accès (102, 202, 402) avec au moins un dispositif d'accès (104, 204.1, 204.2), agencé pour contrôler un passage d'une première zone (106, 206) avec une section d'accès (107, 207.1, 207.2) dans une autre supplémentaire (108, 207),
- au moins un premier dispositif d'émission en champ proche (110, 210.1, 210.2) associé au dispositif d'accès (104, 204.1, 204.2), agencé pour émettre un premier champ d'émission (112, 212.1, 212.2),
- au moins un terminal mobile (132, 332),
- le premier champ d'émission (112, 212.1, 212.2) comprenant au moins un premier ensemble de données d'accès pouvant être reçu par le terminal mobile (132, 332) situé dans la section d'accès (107, 207.1, 207.2),
- le système de stationnement (100, 200, 400) comprenant :

- au moins un deuxième dispositif d'émission en champ proche (114, 214.1, 214.2) associé au dispositif d'accès (104, 204.1, 204.2), agencé pour émettre un deuxième champ d'émission (116, 216.1, 216.2),
- le deuxième champ d'émission (116, 216.1, 216.2) comprenant au moins un deuxième ensemble de données d'accès pouvant être reçu par le terminal mobile (132, 332) se trouvant dans la section d'accès (107, 207.1, 207.2),
- aussi bien le premier champ d'émission (112, 212.1, 212.2) que le deuxième champ d'émission (116, 216.1, 216.2) couvrant essentiellement l'ensemble de la section d'accès (107, 207.1, 207.2),
- le premier ensemble de données d'accès étant une fonction du deuxième ensemble de données d'accès, et
- au moins un dispositif d'évaluation (246, 354), agencé pour déterminer le dispositif d'accès (104, 204.1, 204.2) associé, au moins sur la base d'une évaluation de la relation fonctionnelle entre le premier ensemble de données d'accès reçu par le terminal mobile et le deuxième ensemble de données d'accès reçu par le terminal mobile,
- au moins un dispositif de commande (124, 224), agencé pour libérer, en fonction du résultat d'évaluation, un passage à travers un dispositif d'accès (104, 204.1, 204.2) déterminé,
- le dispositif de commande (124, 224) comprenant au moins un module de réception (126, 226) agencé pour recevoir un message d'accès de la part du terminal mobile (132, 332),
- le message d'accès comprenant au moins un troisième ensemble de données d'accès correspondant au premier ensemble de données d'accès reçu et au deuxième ensemble de données d'accès reçu, le message d'accès comprenant au moins un identifiant attribué au terminal mobile et/ou à l'utilisateur du terminal mobile,
- le message d'accès comprenant au moins un ensemble de données d'état du terminal mobile (132, 332),
- l'ensemble de données d'état comprenant au moins un état de couplage du terminal mobile (132, 332) avec un dispositif de couplage du véhicule (118),
- au moins un ensemble de données d'état des messages d'accès étant vérifié après la réception de messages d'accès par le dispositif de commande, où, lorsque deux messages d'accès sont reçus avec des identifiants de terminaux mobiles différents et les évaluations des deux messages d'accès ont comme résultat le même dispositif d'accès, un terminal mobile est déterminé parmi les au moins deux terminaux mobiles possibles en fonction des états de couplage respectifs, et où, s'il s'avère à partir de l'un des deux messages d'accès qu'un terminal mobile est actuellement couplé à un dispositif de couplage du véhicule, ce terminal mobile est déterminé et le message d'accès correspondant est traité subséquemment avec l'identifiant de ce terminal mobile.

2. Système de stationnement (100, 200, 400) selon la revendication 1, **caractérisé en ce que**

- le premier dispositif d'émission en champ proche (110, 210.1, 210.2) est disposé au niveau d'un premier bord latéral (109, 209.1, 209.2) de la section d'accès (107, 207.1, 207.2) du dispositif d'accès (104, 204.1, 204.2), et
- le deuxième dispositif d'émission en champ proche (114, 214.1, 214.2) est disposé au niveau d'un deuxième bord latéral (111, 211.1, 211.2) de la section d'accès (107, 207.1, 207.2) du dispositif d'accès (104, 204.1, 204.2), lequel deuxième bord latéral est opposé au premier bord latéral (109, 209.1, 209.2).

3. Système de stationnement (100, 200, 400) selon la revendication 1 ou 2, **caractérisé en ce que**

- le système de stationnement (100, 200, 400) comprend au moins un dispositif de commande (124, 224) agencé pour libérer un passage à travers un dispositif d'accès déterminé (104, 204.1, 204.2),
- le dispositif de commande (124, 224) comprenant un module de commande (128, 228), agencé pour commander, en fonction du résultat d'évaluation, le dispositif d'accès déterminé (104, 204.1, 204.2).

4. Système de stationnement (100, 200, 400) selon l'une des revendications précédentes, **caractérisé en ce que**

- le système de stationnement (100, 200, 400) comprend au moins un dispositif de détection de véhicule (242.1, 242.2) associé au dispositif d'accès (104, 204.1, 204.2),
- le dispositif de détection de véhicule (242.1, 242.2) étant agencé pour détecter un véhicule (118) devant le dispositif d'accès (104, 204.1, 204.2), et
- le dispositif de commande (124, 224) comprenant au moins un module d'évaluation, agencé pour déterminer si un véhicule (118) est détecté au niveau du dispositif d'accès déterminé (104, 204.1, 204.2).

5. Système de stationnement (100, 200, 400) selon l'une des revendications précédentes, **caractérisé en ce que**

- le système de stationnement (100, 200, 400) comprend au moins un troisième dispositif d'émission (464.1, 464.2) associé à l'agencement d'accès (102, 202, 402),
- le troisième dispositif d'émission (464.1, 464.2) étant agencé pour émettre un troisième champ d'émission (466.1, 466.2), comprenant un ensemble de données d'activation pour activer une application d'accès (134, 334) installée sur le terminal mobile (132, 332).

**6.** Système de stationnement (100, 200, 400) selon l'une des revendications précédentes, **caractérisé en ce que** le premier dispositif d'émission en champ proche (110, 210.1, 210.2) et/ou le deuxième dispositif d'émission en champ proche (114, 214.1, 214.2) comprend/comprennent une antenne directionnelle.

**7.** Système de stationnement (100, 200, 400) selon l'une quelconque des revendications précédentes, **caractérisé en ce que**

- l'agencement d'accès (102, 202, 402) comprend au moins deux dispositifs d'accès (104, 204.1, 204.2) disposés de manière adjacente les uns par rapport aux autres,
- où, à chacun des dispositifs d'accès (104, 204.1, 204.2) disposés de manière adjacente les uns par rapport aux autres, sont associés au moins un premier dispositif d'émission en "champ proche (110, 210.1, 210.2) et un deuxième dispositif d'émission en champ proche (114, 214.1, 214.2).

**8.** Procédé d'exploitation d'un système de stationnement (100, 200, 400), notamment d'un système de stationnement (100, 200, 400) selon l'une des revendications précédentes, le système de stationnement (100, 200, 400) comprenant au moins un agencement d'accès (102, 202, 402) avec au moins un dispositif d'accès (104, 204.1, 204.2) et au moins un terminal mobile, le procédé comprenant :

- émettre un premier champ d'émission (112, 212.1, 212.2) avec au moins un premier ensemble de données d'accès, à partir d'un premier dispositif d'émission en champ proche (110, 210.1, 210.2) associé au dispositif d'accès (104, 204.1, 204.2),
- émettre un deuxième champ d'émission (116, 216.1, 216.2) avec au moins un deuxième ensemble de données d'accès, à partir d'un deuxième dispositif d'émission en champ proche (114, 214.1, 214.2) associé au dispositif d'accès (104, 204.1, 204.2),
- le premier champ d'émission (112, 212.1,212.2) et le deuxième champ d'émission (116, 216.1, 216.2) pouvant être reçus par le terminal mobile (132, 332),
- aussi bien le premier champ d'émission (112, 212.1, 212.2) que le deuxième champ d'émission (116, 216.1, 216.2) couvrant essentiellement l'ensemble de la section d'accès (107, 207.1, 207.2),
- le premier ensemble de données d'accès étant une fonction du deuxième ensemble de données d'accès,
- déterminer, dans une étape d'évaluation, le dispositif d'accès (104, 204.1, 204.2) associé, au moins sur la base d'une évaluation de la relation fonctionnelle entre le premier ensemble de données d'accès reçu par le terminal mobile et le deuxième ensemble de données d'accès reçu par le terminal mobile,
- libérer, par un dispositif de commande, un passage à travers le dispositif d'accès déterminé (104, 204.1, 204.2) au moins sur la base du résultat d'évaluation de l'étape d'évaluation,
- le dispositif de commande (124, 224) recevant un message d'accès de la part du terminal mobile (132, 332) via un module de réception (126,226) du dispositif de commande (124, 224),
- le message d'accès comprenant au moins un troisième ensemble de données d'accès correspondant au premier ensemble de données d'accès reçu et au deuxième ensemble de données d'accès reçu, le message d'accès comprenant au moins un identifiant associé au terminal mobile et/ou à l'utilisateur du terminal mobile,
- au moins un ensemble de données d'état des messages d'accès étant vérifié après la réception de messages d'accès par le dispositif de commande, où, lorsque deux messages d'accès sont reçus avec des identifiants de terminaux mobiles différents et les évaluations des deux messages d'accès ont comme résultat le même dispositif d'accès, un terminal mobile est déterminé parmi les au moins deux terminaux mobiles possibles en fonction des états de couplage respectifs, et où, s'il s'avère à partir de l'un des deux messages d'accès qu'un terminal mobile est actuellement couplé à un dispositif de couplage du véhicule, ce terminal mobile est déterminé et le message d'accès correspondant est traité subséquemment avec l'identifiant de ce terminal mobile.

Fig.1

Fig.2

EP 3 407 307 B1

Fig.3

Fig.4

EP 3 407 307 B1

Fig.5

Fig.6

Fig.7 Stand der Technik

EP 3 407 307 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017063089 A1
- DE 102014018190 A1
- EP 2312537 A1